# EUROPEAN PATENT SPECIFICATION

(11) **EP 3 047 681 B1**
(45) Date of publication and mention of the grant of the patent: **18.10.2017**
(21) Application number: 14780697.0
(22) Date of filing: 16.09.2014
(51) Int. Cl.: H04W 48/12, H04W 8/00, H04W 4/02

(54) **INTERLEAVING ADVERTISING PACKETS FOR IMPROVED DETECTABILITY AND SECURITY**
VERSCHACHTELUNG VON WERBUNGSPAKETEN FÜR VERBESSERTE ERKENNBARKEIT UND SICHERHEIT
ENTRELACEMENT DE PAQUETS D'ANNONCE POUR UNE DÉTECTABILITÉ ET UNE SÉCURITÉ AMÉLIORÉES

(30) Priority: 17.09.2013 US 201361878899 P; 21.05.2014 US 201414284317
(43) Date of publication of application: 27.07.2016
(73) Proprietor: Qualcomm Incorporated, San Diego, CA 92121-1714 (US)
(72) Inventor: WURSTER, Charles Stewart, San Diego, California 92121-1714 (US); HUNTER, Kevin Edward, San Diego, California 92121-1714 (US); VACCARO, Jeffrey, San Diego, California 92121-1714 (US); MENDEZ, Vicente, San Diego, California 92121-1714 (US)
(74) Representative: Wegner, Hans
(86) International application number: PCT/US2014/055930
(87) International publication number: WO 2015/042065

(56) References cited:
- WO-A1-2013/109300
- WO-A2-2013/126759
- US-A1- 2013 178 163
- US-A1- 2013 214 909

## Description

### BACKGROUND

Cellular and wireless communication devices, such as smartphones, have seen explosive growth over the past several years. This growth has been fueled by better communications hardware, larger networks, and more reliable protocols. Today's smartphones include cameras, GPS receivers, Bluetooth® transceivers, and of course the cellular communication capabilities (e.g., LTE, 3G and/or 4G network access) to enable the devices to establish data communication links with the Internet. Smartphones are now very widely deployed in society. Additionally, the components and capabilities in smartphones are now very affordable, enabling the capabilities to be deployed in other types of devices.

WO2013/109300 A1 provides systems and methods for receiving an out-of-band signal and for determining that a communicative connection is available based at least in part on the out-of-band signal, and for connecting to the communicative connection based at least in part on determining that a communicative connection is available.

WO2013/126759 A2 discloses methods, systems and devices to enable synchronizing obscured identification information between a wireless identity transmitter and a central server to support one-way communication of the obscured identification information to the central server. The wireless identity transmitter may be a compact device configured to broadcast messages, such as through Bluetooth ® advertisements, including an obscured identifier for receipt and relay to the central server by proximate proximity broadcast receivers via sighting messages that may also include location information. The central server may decode received identification codes to identify the wireless identity transmitter. The wireless identity transmitter may create message data by concatenating identifying information with an incrementing nonce, encrypting the concatenated information, and truncating the encrypted information. Alternatively, concatenated identification information may be encrypted with a pseudo-random function and a secret key known by the central server. The central server that may compare received data to pre-calculated encrypted data.

### SUMMARY

The invention is defined by the independent claims.

The various embodiments provide systems, devices, non-transitory processor-readable storage media, and methods for utilizing messages of a similar protocol but different packet formatting that are broadcast in an interleaving fashion by a transmitter or beacon, such as a wireless identity transmitter. A wireless identity transmitter may be a compact device configured to broadcast packets that may include a unique and secure identification code using short-range wireless signaling technology, such as Bluetooth® Low Energy (LE). The broadcast packets (also referred to as "broadcast messages" or "beacon messages") may be received by physically proximate proximity broadcast receivers (PBR), which may be dedicated receivers, smartphones configured with a PBR application, tablet computers configured with a PBR application, and stationary receivers, to name just a few examples. Using long range wireless networks and/or the Internet, proximity broadcast receivers may transmit or upload received identifiers from such packets along with other associated information, such as time, sensor data, and location, to a central server as sighting messages.

In various embodiments, the wireless identity transmitter may broadcast a first message (or packet) of a first packet format that is configured to be well-suited for use by a first software implementation (e.g., a firmware, an application, an instruction set, a routine, a service, a process, a thread, an operating system, etc.) of the proximity broadcast receiver that is associated with message of the first packet format. The wireless identity transmitters may also broadcast a second message (or packet) or a second packet format that is associated with a second software implementation (e.g., a firmware, an application, an instruction set, a routine, a service, a process, a thread, an operating system, etc.) of the proximity broadcast receiver. The first message in the first packet format may be associated with a first proximity system, and the second message in the second packet format may be associated with a second proximity system. The proximity broadcast receiver may receive and process the first message with the first protocol to detect information that indicates the presence of one or more messages in the second packet format (i.e., messages associated with the second proximity system), causing an adjustment to the receiver. For example, in response to detecting information that indicates the presence of the messages of the second packet format, the receiver may change a behavior of the receiver by waking the second software implementation and/or increasing the duty cycle of the second software implementation. The adjusted receiver may then receive and process the second message (i.e., via the second software implementation), and perform an action based on the processed second message.

In some embodiments, receiving, by the receiver, the first message of the first packet format may include receiving, by the receiver, the first message of the first packet format from a first beacon, and receiving, by the receiver in response to adjusting the receiver, the second message of the second packet format transmitted by the at least one beacon may include receiving the second message of the second packet format from the first beacon. In some embodiments, receiving, by the receiver, the first message of the first packet format may include receiving, by the receiver, the first message of the first packet format from a first beacon, and receiving, by the receiver in response to adjusting the receiver, the second message of the second packet format transmitted by the at least one beacon may include receiving the second message of the second packet format from a second beacon. In some embodiments, the second beacon may be a mobile device (e.g., a cell phone, etc.).

In some embodiments, adjusting the receiver to process the one or more messages of the second packet format based on the detected information (i.e., changing a behavior of the receiver) may include at least one of waking, by the receiver, the second software implementation associated with the one or more messages of the second packet format based on the detected information, and changing, by the receiver, a duty cycle for the second software implementation associated with the one or more messages of the second packet format to increase a frequency at which the software implementation monitors for receipt of the one or more messages of the second packet format at the receiver. In some embodiments, performing, by the receiver, the action based on the received second message may include transmitting, by the receiver, to a server a sighting message including data from the received second message.

In some embodiments, the first and/or second messages may include portions of data that may be combined by the receiver, such as data that may be used with an associated application (e.g., the second software implementation). For example, the proximity broadcast receiver may receive and process the first and second message, combining data from both messages to generate a command to execute or other data (e.g., a rolling identifier to transmit to the central server). In some embodiments, the first message and the second message may be non-connectable Bluetooth packets (e.g., Bluetooth LE advertisements). In some embodiments, the first message may either include a first universal unique identifier with a first length of zero or not include a Bluetooth Special Interest Group (SIG) specified universal unique identifier, and the second message may include a second universal unique identifier with a second length that is not zero. In some embodiments, receiving the first message by the proximity broadcast receiver via the first software implementation may consume less receiver power than receiving the second message via the second software implementation. In some embodiments, the second message may include a rolling identifier associated with the wireless identity transmitter.

In some embodiments, the method may further include identifying, by the receiver, a first portion of data by processing the received first message, and identifying, by the receiver, a second portion of the data by processing the received second message, wherein performing, by the receiver, the action based on the received second message may include combining, by the receiver, the identified first portion of the data and the identified second portion of the data, generating, by the receiver, a command based on a combination of the identified first portion of the data and the identified second portion of the data, and executing the command by the receiver.

In some embodiments, the second packet format may permit more data to be transmitted in the one or more messages of the second packet format than in the first message. In some embodiments, the second packet format may utilize a stronger security protocol. In some embodiments, the receiver may be included in a mobile device. In some embodiments, beacons (i.e., wireless identity transmitter) may be included within a mobile device (e.g., a cell phone, etc.).

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIG. 1 is a communication system diagram illustrating network components of embodiment architectures suitable for use in various embodiments.
FIG. 2A is a process flow diagram illustrating an embodiment method for broadcasting an identifier from a wireless identity transmitter.
FIG. 2B is a process flow diagram illustrating an embodiment method for broadcasting an identifier from a wireless identity transmitter using different packet formats.
FIGS. 3A-4B are message (or packet) format diagrams illustrating message (or packet) structures including identity information according to various embodiments.
FIG. 5 is a component diagram illustrating various modules within a mobile proximity broadcast receiver suitable for use in various embodiments.
FIG. 6 is a process flow diagram illustrating an embodiment method of a mobile proximity broadcast receiver relaying a wireless identity transmitter's identifier along with other data such as a time or location.
FIG. 7 is a process flow diagram illustrating an embodiment method of a mobile proximity broadcast receiver relaying a wireless identity transmitter's identifier based on a determined packet format.
FIG. 8 is a process flow diagram illustrating an embodiment method of receiving an instruction from a central server in response to transmitting a sighting message based on proximity to a wireless identity transmitter.
FIG. 9 is a component diagram illustrating various modules within a central server suitable for use in various embodiments.
FIG. 10 is a diagram illustrating a wireless identity transmitter registration process for use in various embodiments.
FIG. 11 is a process flow diagram illustrating an embodiment method for a central server to process sighting messages received from proximity broadcast receivers.
FIG. 12 is a process flow diagram illustrating an embodiment method for a server handling a rolling identifier.
FIG. 13A is a process flow diagram illustrating an embodiment method for a wireless identity transmitter broadcasting a first message of a first packet format and second message of a second packet format.
FIG. 13B is a process flow diagram illustrating an embodiment method for a proximity broadcast receiver receiving and processing broadcast messages transmitted by a wireless identity transmitter with the embodiment method described in FIG. 13A.
FIG. 14A is a process flow diagram illustrating an embodiment method for a wireless identity transmitter broadcasting a first message of a first packet format including a first data portion and second message of a second packet format including a second data portion.
FIG. 14B is a process flow diagram illustrating an embodiment method for a proximity broadcast receiver receiving and processing broadcast messages transmitted by a wireless identity transmitter with the embodiment method described in FIG. 14A.
FIG. 15 is a component block diagram of a wireless identity transmitter in accordance with various embodiments.
FIG. 16 is a component block diagram of a proximity broadcast receiver in accordance with various embodiments.
FIG. 17 is a component block diagram of a mobile device suitable for use in various embodiments.
FIG. 18 is a component block diagram of a server device suitable for use in various embodiments.

### DETAILED DESCRIPTION

The various embodiments will be described in detail with reference to the accompanying drawings. Wherever possible, the same reference numbers will be used throughout the drawings to refer to the same or like parts.

The word "exemplary" is used herein to mean "serving as an example, instance, or illustration." Any implementation described herein as "exemplary" is not necessarily to be construed as preferred or advantageous over other implementations.

The term "computing device" is used herein to refer to any one or all of laptop computers, servers, mobile devices, personal computers, and similar electronic devices equipped with at least a processor. In various embodiments, such computing devices may be configured with at least one network interface to establish a network connection, such as a wide area network (WAN) or local area network (LAN) connection (e.g., an LTE, 3G or 4G wireless wide area network transceiver, a wired connection to the Internet, or WiFi).

The term "mobile device" is used herein to refer to any one or all of cellular telephones, smartphones (e.g., iPhone®), web-pads, tablet computers, Internet enabled cellular telephones, WiFi enabled electronic devices, personal data assistants (PDA's), laptop computers, personal computers, and similar electronic computing devices equipped with at least a processor, a short-range radio (e.g., a Bluetooth® radio, a Peanut® radio, a WiFi radio, etc.) and a wide area network connection (e.g., an LTE, 3G or 4G wireless wide area network transceiver or a wired connection to the Internet). Reference to a particular type of computing device as being a mobile device is not intended to limit the scope of the claims unless a particular type of mobile device is recited in the claims.

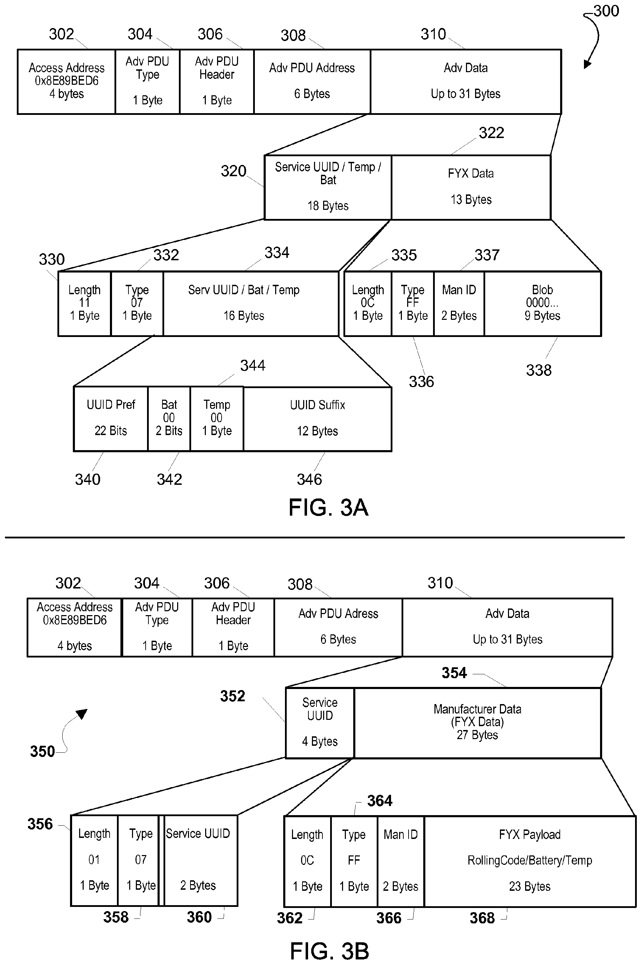

The terms "beacon message" and "broadcast message" are used herein to refer to short-range wireless broadcast signals (e.g., packets) broadcast by beacon devices or wireless identity transmitters (defined below) that may include identification information (i.e., identifiers) associated with the wireless identity transmitters and/or their users. Such identifiers may be periodically changed and encrypted (i.e., rolling identifiers). In various embodiments, broadcast messages may include other identifying information, such as Bluetooth^{®} MAC addresses and counters, which may also be encrypted. Additionally, broadcast messages may include metadata and other data, such as characteristics of the transmitting wireless identity transmitter (e.g., device type), sensor data, and/or commands or other instructions. In various embodiments, broadcast messages may be transmitted via a wireless communication protocol, such as Bluetooth Low Energy, WiFi, WiFi Direct, Zigbee®, Peanut®, and other RF protocol. In various embodiments, because of the high unreliability of certain short-range transmission channels, broadcast messages may be single packet transmissions limited to a certain size (e.g., 80 bits, 10 bytes, 20 bytes, etc.). For example, the payload of an embodiment broadcast message may be 80 total bits, including 4 bits that indicate battery status information and 76 bits that indicate a rolling identifier. As another example, an embodiment broadcast message may include 20 bits representing a nonce or counter and 60 bits representing a rolling identifier, such as generated with a pseudo-random function or encryption algorithm. Exemplary broadcast message (or packet) structures are described in detail below in FIGS. 3A-4B.

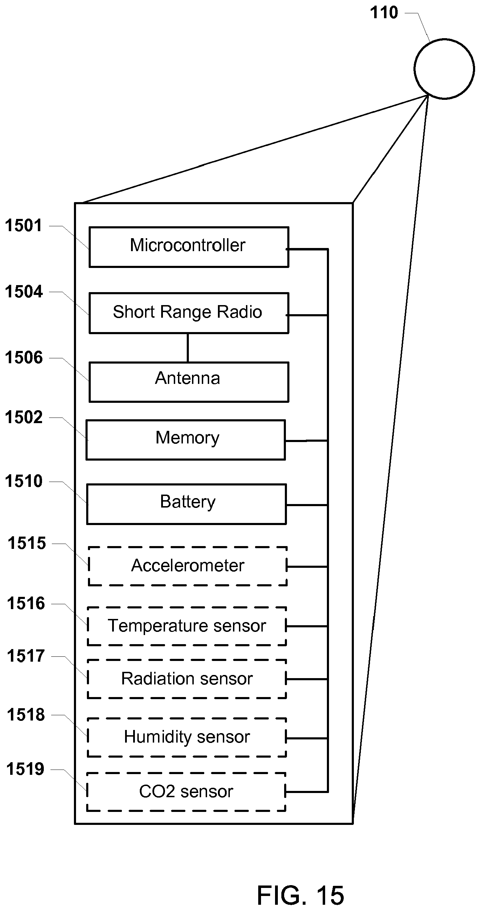

The term "wireless identity transmitter" is used herein to refer to a compact device configured to periodically transmit broadcast messages via short-range wireless transmitters. Wireless identity transmitters may be mobile, such as when carried or affixed to mobile persons or items, or alternatively may be stationary, such as when installed within buildings. Wireless identity transmitters may store and be associated with a unique device identifier (i.e., a "*deviceID*"), such as a factory ID. In some embodiments, the unique device identifier may be a code 56-bits in length. In various embodiments, for security purposes, this unique device identifier, along with other data (e.g., nonce or counter values), may be encoded, encrypted, or otherwise obfuscated when included within broadcast messages as a "rolling identifier." Wireless identity transmitters may be configured to maintain inaccurate time (e.g., UTC) information, such as by using a 30 ppm 16 kHz crystal oscillator as a clock. Wireless identity transmitters are described throughout the disclosure, in particular with reference to FIG. 15. In various figures and diagrams of this disclosure, wireless identity transmitters may be referred to as "WIT" or "WITs". In various embodiments, when configured to broadcast non-connectable messages (e.g., non-connectable Bluetooth packets, etc.), WITs may also be referred to merely as beacon devices.

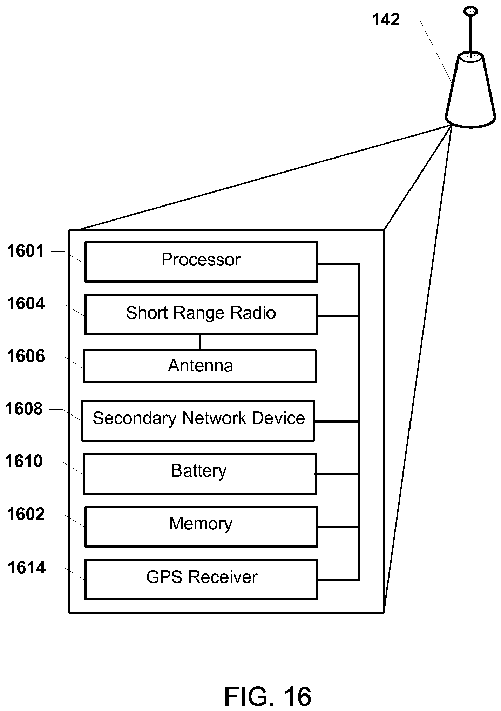

The term "proximity broadcast receiver" is used herein to refer to devices that are configured to receive broadcast messages transmitted by wireless identity transmitters. In various embodiments, proximity broadcast receivers may be stationary devices (or "stationary proximity broadcast receivers") permanently positioned throughout places (e.g., buildings, retail stores, etc.), or alternatively may be mobile devices configured to operate as proximity broadcast receivers (or "mobile proximity broadcast receivers"). For example, a smartphone may be configured to receive broadcast messages and operate as a mobile proximity broadcast receiver. Reference to a particular type of computing device as being a proximity broadcast receiver is not intended to limit the scope of the claims unless a particular type of device is recited in the claims. Further, unless otherwise indicated, references to proximity broadcast receivers throughout this disclosure are not intended to limit any method or system to a particular type of proximity broadcast receiver device (e.g., wireless or stationary). Proximity broadcast receivers are described throughout the disclosure, in particular with reference to FIG. 16. In various figures and diagrams of this disclosure, proximity broadcast receivers may be referred to as "PBR" or "PBRs," and mobile proximity broadcast receivers are referred to in the figures as "MPBR" or "MPBRs."

The terms "identity transceiver" and "wireless identity transceiver" are used herein to refer to devices that are configured to receive and transmit broadcast messages. In other words, an identity transceiver may function as both a proximity broadcast receiver and an identity transmitter. For example, a smartphone may be configured to broadcast short-range signals that include its unique identifier as well as receive broadcast messages from wireless identity transmitters within proximity. Throughout this disclosure, various operations may be described as being distinctly performed by either a wireless identity transmitter or a proximity broadcast receiver, however, those skilled in the art should appreciate that a device configured to operate as an identity transceiver may be configured to perform any or all of the same operations and thus may be interchangeable with references to either a wireless identity transmitter or a proximity broadcast receiver.

The term "sighting message" is used herein to refer to reports, signals, and/or messages sent by proximity broadcast receivers to a central server in response to receiving broadcast messages from wireless identity transmitters. Sighting messages may be transmissions that include part or all of the information encoded in received broadcast messages, including any obscured or encrypted information, such as identifiers of wireless identity transmitters. Additionally, sighting messages may include metadata and other information (or "associated data"), such as the sending proximity broadcast receivers' identification information (e.g., device ID, third-party affiliations, etc.), whether the proximity broadcast receiver paired with a wireless identity transmitter, transmissions context information (e.g., a code indicating the sighting message is related to an alert or a registered service), information regarding software or applications executing on proximity broadcast receivers (e.g., app IDs), location information, proximity information with respect to known areas within a place, and timestamp data. In some embodiments, sighting messages may also include authentication information (e.g., secret keys, passes, special codes, digital certificates, etc.) that may be used by a central server to confirm the identification (or identification information) of proximity broadcast receivers transmitting the sighting messages. For example, a sighting message may include a code from a hash function that can be decoded by the central server to ensure the sending proximity broadcast receiver is associated with a particular registered service. In various embodiments, sighting messages may be sent immediately after receipt of broadcasts (e.g., when related to an alert), buffered, or scheduled along with other scheduled transmissions.

The term "packet format" as used herein refers to any structure, arrangement, pattern, type, and/or format of a message that may be broadcast by a wireless identity transmitter. Packet formats may be specified or defined within a Bluetooth specification or another specification (e.g., a Qualcomm software development kit (or SDK), etc.). For example, the packet format of a broadcast message may be a certain Bluetooth packet structure that is indicated within the Bluetooth specification. In various embodiments, broadcast messages may be structured as non-connectable (or connectionless) advertisement packets of various packet formats or types.

Systems have been recently proposed that leverage the wireless communication functionalities of cellular and wireless devices to relay information to be used in various services, such as locating/tracking persons or assets. Some of these systems involve the development of a wearable device that communicates data to a server, such as the position of the wearer. Others involve establishing a radio connection between the wearer and a cellular device, or utilize broadcasts of information to be received by nearby devices. For example, devices may establish connections using broadcast signals, such as Bluetooth advertising packets, that include identifying information "over the air." Packet content and/or packet formats of broadcast signals may be identified via packet sniffers and analyzers.

There are many different ways for devices of such systems to advertise that services are available. In particular, devices configured with a Bluetooth transceiver may utilize many different formats, types, patterns, or structures to send a Bluetooth advertisement packet, including connectable or non-connectable packets and/or advertisements with various data, such as service universally unique identifier (UUID), manufacturer specific data, name, etc. As the supported structures of Bluetooth packets are short, only limited information may be conveyed with various Bluetooth packet structures.

The various structures of packets may correspond to different uses or providers of data. For example, certain Bluetooth packet formats may be structured for use with certain mobile device operating systems, firmware, applications, and/or functionalities. Although the various possible types of Bluetooth packet structures may be provided for by the Bluetooth specification, not all devices may be capable of easily registering for all packet formats. For example, some devices may be configured to actively monitor for only certain packet formats in order to preserve power, and thus may not easily receive and process messages of other packet formats.

Therefore, as different types of packets (or packet formats) may be better processed by various types of devices and/or software implementations (e.g., firmware, applications, instruction sets, routines, services, processes, threads, operating systems, etc.) executing on devices, it may be valuable for wireless identity transmitters to broadcast different packet formats. The various embodiments provide methods, devices, and systems for broadcasting different packet formats in an interleaving fashion to improve processing of broadcast messages, such as by proximity broadcast receivers. While the various embodiments are described herein with reference to wireless identity transmitters and proximity broadcast receivers, the embodiment methods of interleaving two or more different packet formats may also have application in other types of systems and implementations involving a transmitter and a receiver. A wireless identity transmitter is one type of transmitter and a proximity broadcast receiver is one type of receiver suitable for employing the various embodiments. Therefore, references to wireless identity transmitters and proximity broadcast receivers are for illustration purposes and are not intended to limit the scope of the invention or the claims unless explicitly recited in the claims.

A wireless identity transmitter may be configured to format and transmit broadcast messages of at least two different packet formats that may enable a nearby proximity broadcast receiver (e.g., a smartphone) to adjust the receiver, or otherwise change a behavior of the receiver, and efficiently process data from the messages with the adjusted receiver. Such adjustments (or changes in behavior) of the receiver device may include adjusting software implementations (e.g., firmware, applications, instruction sets, routines, services, processes, threads, operating systems, etc.) executing on the device and that are associated with a particular packet format. In some embodiments, the proximity broadcast receiver device may adjust a software implementation by waking the software implementation and/or changing a duty cycle of the software implementation. For example, a wireless identity transmitter may broadcast a first Bluetooth advertisement packet crafted to be detected by a particular operating system and to cause a proximity broadcast receiver (e.g., a smartphone) to wake an application or to reconfigure the application to execute more specific scans for subsequent broadcast messages of different packet formats. The wireless identity transmitter may further broadcast a second Bluetooth advertisement packet crafted to be detected and processed by the adjusted receiver, such as via a Bluetooth subsystem with an increased duty cycle. The broadcast messages of the at least two different packet formats may be connectionless Bluetooth LE packets having different packet formats.

In some embodiments, the broadcast messages or packets of different packet formats may not be different at the physical layer (or 'PHY' layer), but instead may only be different regarding their processing by software implementations (e.g., firmware, applications, instruction sets, routines, services, processes, threads, operating systems, etc.) of receiver devices. In other words, the broadcast messages of different packet formats may utilize the same communication protocol. For example, a first packet in a first packet format and a second packet in a second packet format may both have similar physical layers (e.g., Bluetooth LE), but may be associated with different firmware routines executing on a smartphone proximity broadcast receiver.

Interleaving the transmission of broadcast messages of different packet formats may improve the reception and processing of broadcast messages that include information related to wireless identity transmitters. In some embodiments, by transmitting a first message of a first packet format that is well-suited (or optimized) for latency or power-efficient processing/recognition and that may be typically used by the operating system of a smartphone (e.g., iPhones, Androids, etc.), the wireless identity transmitter may cause proximity broadcast receivers to respond to a second broadcast message of a second packet format with a faster engagement within their operating systems. For example, by sending a preparatory first packet that is configured to be efficiently recognized and engaged by an operating system (OS), a wireless identity transmitter may cause a proximity broadcast receiver to run code/routines or launch certain apps that are well-suited (or optimized) for handling subsequent data packets of a different type that may not otherwise be efficiently engaged by the operating system. In other words, a message of a first packet format that is well-suited (or optimized) for an operating system may be broadcast in order to enable a message of a second packet format better suited for communicating information to be efficiently received at a proximity broadcast receiver. Such second packet formats may be less efficient (or not optimized) for particular receivers (or their active software implementations) to receive as these messages may include more data, such as sensor data (e.g., radiation sensor data, humidity sensor data, temperature sensor data, etc.). In some embodiments, the second format may permit more data to be transmitted in the one or more broadcast messages of the second format than in the messages of the first packet format. In some embodiments, the second format may utilize a stronger security protocol, such as by including encrypted or rolling data.

As an illustration: a wireless identity transmitter (e.g., a Gimbal beacon device from Qualcomm, Inc.) may transmit a first broadcast message with a rolling identifier using a first packet format that is not structured for the scanning operations of a proximity broadcast receiver implementing a particular operating system (e.g., iOS). Broadcast messages of the first packet format may only be handled via background processes in the proximity broadcast receiver and therefore may not be efficiently addressed. However, if the wireless identity transmitter thereafter transmits a second message of a second packet format known to be well-suited (or optimized) for the proximity broadcast receiver's operating system and interleaved with the first message of the first packet format, the proximity broadcast receiver may perform improved scanning for the first broadcast message including the rolling identifier.

In some embodiments, broadcast messages of a first packet format and messages of a second packet format may both be transmitted by a single wireless identity transmitter (or beacon device). In some embodiments, broadcast messages of a first packet format may be transmitted by a first device (e.g., a first beacon device) and broadcast messages of a second packet format may be transmitted by a second device (e.g., a second beacon device). In various embodiments, such beacon devices may be included within mobile devices, such as cellular phones or smartphones.

This interleaving technique may be particularly helpful when a proximity broadcast receiver utilizes techniques that use static packets and it is desirable to not have each wireless identity transmitter send a unique code that can be read by anyone (e.g., packet sniffers). For example, a plurality of wireless identity transmitters in a retail store may broadcast messages that include a unique static ID for each area of the retail store. In this case, a competitor could walk through to receive the broadcast messages and map the retail store in order to provide competing offers. However, by interleaving packet formats, the retail store may have all wireless identity transmitters transmit messages that include the same data (or even data transmitted within other competitor stores) that may cause nearby proximity broadcast receivers (e.g., customer mobile phones) to wake up, scan for Bluetooth LE packets including rolling codes associated with the retail store areas, and securely determine the area of the retail store in which the proximity broadcast receivers are currently located.

In some embodiments, a wireless identity transmitter may be configured to transmit data (or data portions) using two or more broadcast messages of two or more packet formats. For example, the wireless identity transmitter may broadcast a first message of a first packet format that is well-suited (or optimized) for use by a smartphone operating system and that includes a portion of a command or application data and a second message of a second packet format that is associated with a certain application and that includes another portion of the command or application data. A proximity broadcast receiver may be configured to combine the portions of data received in the two broadcast messages of different packet formats. For example, the proximity broadcast receiver may combine bytes of data received in the first and the second message to generate a command to be executed by the proximity broadcast receiver.

In various embodiments, the wireless identity transmitter may perform interleaving of different packet formats in different manners. For example, the wireless identity transmitter may be configured to broadcast a first message of a first packet format and then a second message of a second packet format (i.e., 1-to-1), broadcast the first message in the first packet format for a predefined number of iterations and then broadcast the second message in the second packet format for a predefined number of iterations (e.g., 3-to-1, 1-to-3, etc.), etc. In some embodiments, the wireless identity transmitter may utilize a Fibonacci equation for determining a sequence of interleaving packet formats for broadcast messages. In another embodiment, the wireless identity transmitter may wait (or add space) in between the broadcast of messages of different packet formats. For example, the wireless identity transmitter may wait a certain period of time (e.g., 100 milliseconds (ms), etc.) in between iterations of broadcasting a first and second message of different packet formats or alternatively may wait a certain number of milliseconds in between broadcasting the first and second message (e.g., 50 ms, etc.). Such spacing or waiting periods may be based on the types of operating system or devices that are receiving the packets. For example, the time between broadcasting the first and second message may be a first number of milliseconds when the first message is configured to be well-suited (or optimized) for use in an iOS device. As another example, the time between broadcasting the first and second message may be a second number of milliseconds when the first message is configured to be well-suited (or optimized) for use in an Android device. In other words, in various embodiments, the wireless identity transmitter may iteratively broadcast (or re-broadcast) the first and second message using various repetition and/or timing sequences.

In another embodiment, the wireless identity transmitter may broadcast different packet formats in sequences based on the impact of transmissions on its battery. For example, because there may be power drain consequences when messages of certain packet formats are transmitted within a certain time period, the wireless identity transmitter may utilize a predetermined time threshold to regulate the broadcast of messages of such packet formats to avoid draining the battery.

In various embodiments, the wireless identity transmitter may broadcast packets of the first and second formats independently. For example, the wireless identity transmitter may utilize different clocks for broadcasting the different packet formats. Accordingly, the order in which first and second packet formats are broadcast and/or received may not be important for the various embodiments. For the non-limiting purpose of illustration, a wireless identity transmitter may periodically broadcast for an indefinite period of time both a first packet having a service UUID and also may broadcast a second packet having no service UUID (or a service UUID of zero length), wherein the second packet may merely indicate that the first packet is also being broadcast.

Different broadcast receiver devices may be configured to monitor, scan, receive, or otherwise process packets of different packet formats. For example, a first broadcast receiver device may be configured to only scan for broadcast packets of a first packet format, a second broadcast receiver device may be configured to scan for broadcast packets of the first packet format and/or a second packet format, and a third broadcast receiver device may be configured to only scan for broadcast packets of the second packet format. Therefore, for certain devices, the embodiment interleaving techniques may be useful as wireless identity transmitters may broadcast at the same time both packets in a first packet format that include indicators that other packets with data are available, as well as the packets in the second format that include the data that may be used for various applications (e.g., secure, rolling identifiers), such as tracking or relaying related information to a server. For example, packets in a first format may cause a smartphone (e.g., a smartphone configured with an application to function as a broadcast receiver device) to start looking for packets in a second format (e.g., including a rolling identifier) for which the smartphone was not previously configured to scan (or was only configured to scan for such packets infrequently). In this manner, computing devices of all configurations may be made capable of efficiently processing broadcast messages that include rolling identifiers.

It should be noted that the various embodiments may utilize packets or broadcast messages that do not include synchronizing information, timing information, or other data that may be utilize by a receiving device (e.g., a proximity broadcast receiver) to establish a connection between the transmitter device (e.g., a wireless identity transmitter) and the receiving device (e.g., proximity broadcast receiver). In particular, the broadcast messages or packets may be non-connectable Bluetooth LE advertisements. Further, unlike pilot communications in known communication schemes, the embodiment connectionless packets or broadcast messages may merely indicate the availability of nearby proximity systems and/or broadcasting devices without providing identification information. For example, packets of a first format broadcast by a wireless identity transmitter may not include the wireless identity transmitter's identity, but may instead only include flags, data, codes, or other indicators that some nearby transmitter is also broadcasting packets in a second format. Therefore, the various embodiments are distinct from other schemes, such as CDMA communications related to a WAN (e.g., a cellular network) or WiFi communications with a router of a LAN, because the embodiment devices may simply utilize broadcast packets of different formats to indicate the presence of different proximity systems without indicating data needed for establishing connections.

In general, broadcast messages including the encrypted identifier may be received by a network of proximity broadcast receivers, such as cell phones, mobile devices, or stationary proximity broadcast receivers, which can communicate with one or more central servers. In the various embodiments, a wireless identity transmitter may be a compact device configured to transmit a packet with an identification code in a format that can be received by any proximity broadcast receiver within range of the short-range wireless broadcast. Since the wireless identity transmitter relies on a short-range wireless signaling (e.g., short-range radio signals, such as Bluetooth Low Energy packets, light signals, sound signals, etc.) to transmit broadcast messages that include its identifier, only proximity broadcast receivers within proximity may receive such broadcast message. Thus, a proximity broadcast receiver's own location may provide an approximate location for the wireless identity transmitter at the time of receipt of a broadcast message. Each proximity broadcast receiver receiving a broadcast message from a wireless identity transmitter may pass sighting messages including the encrypted wireless identity transmitter identifiers to a central server for processing. The central server may decode encrypted or obscured information including the rolling identifier within received sighting messages.

In various embodiments, a wireless identity transmitter may be configured to periodically change the manner in which the device identifier is encoded/encrypted or change the identifier itself (referred to herein as a "rolling identifier") in a manner that makes tracking the transmitter difficult while enabling the central server to decode, decrypt or otherwise recognize the unique device identifier (and other identifying information) of the wireless identity transmitter. For example, a wireless identity transmitter may be configured to periodically broadcast a Bluetooth packet including an encoded version of the wireless identity transmitter's device identifier (i.e., *deviceID*). Such encryption of identifiers indicated in broadcast messages may be required to enable the central server to reliably identify the originator wireless identity transmitter of a broadcast message while forcing a third-party (e.g., passive attacker) to determine the origin of the broadcast message by only guessing. For example, if the identifier was static, the third party could sniff the identifier, such as by impersonating a proximity broadcast receiver, and then use the identifier to track the wireless identity transmitter. Rolling identifiers may make such an attack impossible if the third party lacks the means of generating the encrypted identifiers.

Since a single packet broadcast message may not support a payload that can fit a cipher text of a conventional asymmetric key encryption, standard private/public key pair encryption may not be useable in the various embodiments. Additionally, wireless identity transmitters are generally broadcast-only devices, so there is no back channel that is typically required in conventional encryption schemes. Therefore, the central server in various embodiments may process encrypted message payloads by pre-provisioning a shared secret key unique to each wireless identity transmitter. Such secret keys may be associated with each wireless identity transmitter's unique device identifier at the central server and may be used to decode data (e.g., identifiers) encoded by the each wireless identity transmitter.

Additional precautions may be important to protect against security breaches, such as hacker attacks against databases associated with a central server, as well as to provide registered users (e.g., merchants, parents, children, etc.) peace of mind and confidence their privacy may be fully protected. Such privacy safeguards may be provided to parties registered with embodiment systems by storing identifying information (e.g., names, addresses, financial information, medical information, etc.) separately from other information related to tracking devices and/or proximity information of users. In particular, to avoid unintended leaking of personal information of registered merchants, customers, children, or individuals, embodiment systems may utilize "double-blind" architectures. For example, such a double-blind architecture may use a first unit (e.g., a server, database, or other computing hub) that stores and has access to information related to the proximity information or other location-based data of registered users' devices (e.g., wireless identity transmitters, proximity broadcast receivers, identity transceivers, mobile devices, etc.). In other words, the first unit may access information associated with sighting messages that indicate approximate locations/proximities of various users' devices. However, the first unit may not store uniquely identifying personal information, such as user names, addresses, and/or social security numbers. Instead, a second unit may store the identifying personal information without being configured to access any location/proximity information as used by the first unit. The first and second units may use anonymous identifiers that connect data stored within the two units without indicating the protected information stored in either unit. In some embodiments, the first and second units may be maintained by separate entities (e.g., service providers), and further, at least one of such entities may be trusted by registered users who provide identifying information.

The various embodiments leverage a large infrastructure of mobile devices already in place. Many modern mobile devices, such as smartphones, are already equipped with multiple radios, including short-range radios such as Bluetooth® radios, and therefore may be configured to perform as mobile proximity broadcast receivers and receive identification codes from a proximate wireless identity transmitter. Mobile devices are also often equipped with a clock that may provide a current time and a GPS receiver that may provide a current location whenever a wireless identity transmitter identifier is received. The mobile devices may communicate these identification codes, times, and locations via sighting messages to central servers through longer range network connections, such as a cellular radio connection. Thus, many of the large number of mobile devices already in use or soon to be in use may be incorporated as mobile proximity broadcast receivers to extend the reach of various embodiment systems.

By relying on the long range radios and other services of proximity broadcast receivers to report the location and time of received broadcast message (or "sightings") to a central server, wireless identity transmitters can be relatively small, inexpensive, and simple devices, including little more than a short-range radio, such as a Bluetooth® LE transceiver, and a battery. In various embodiments, wireless identity transmitters may also include additional short-range radios, such as Peanut® radios. In various embodiments, the wireless identity transmitters may not include a user interface, multiple radios, global positioning system (GPS) receiver, or other features common on mobile devices. Embodiment wireless identity transmitters may also consume very little power allowing them to be deployed without needing to be frequently recharged or replaced. These characteristics make them ideal for a wide variety of uses and implementation in a variety of physical configurations. For example, wireless identity transmitters may be easily hidden or incorporated into many different personal objects, such as buttons, watches, shoes, briefcases, backpacks, ID badges, clothing, product packaging, etc.

Embodiment methods, devices, and systems may be used for a wide range of purposes. For example, various embodiments may be used to track missing children, mental patients, pets, Alzheimer patients, victims of natural disasters and the first responders who try to rescue them, etc. Further embodiments may be installed on high-value property for tracking such property in logistics systems, monitoring boundary area transits (e.g., into/out of construction sites, and tracking whether the property is ever stolen or reported missing. Embodiments could also be use for monitoring people entering and leaving a controlled area. Various embodiments may assist or complement the Amber Alert system or provide information to police officers. Embodiments may also provide valuable information to private persons or business entities.

Wireless identity transmitters may also serve to communicate information (e.g., sensor data) or prompt proximity broadcast receivers to take particular actions. In some embodiments, wireless identity transmitters may transmit broadcast messages that indicate one or more behaviors to be performed by a proximity broadcast receiver, such as a mobile phone, in which case the broadcast message may also include a secondary segment corresponding to a command (i.e., a command identifier) or the type of the wireless identity transmitter (i.e., a device type identifier or device type information). Proximity broadcast receivers receiving the broadcast message may take an action based on the identification or secondary code. Alternately, the proximity broadcast receivers may transmit the received broadcast message to the central server, which may return instructions or another code to the proximity broadcast receiver to indicate a behavior to be performed.

In further embodiments, wireless identity transmitters and proximity broadcast receivers may be configured to exchange transmissions using various wireless technologies, such as LTE-D, peer-to-peer LTE-D, WiFi, and WiFi Direct. In some embodiments, wireless identity transmitters may be configured to broadcast messages via a WiFi radio such that proximity broadcast receivers with WiFi transceivers may receive the broadcast messages. In such embodiments, wireless identity transmitters may utilize WiFi transmissions to broadcast identification information similar to WiFi access point broadcast advertisements. For example, a wireless identity transmitter including a WiFi radio may be configured to transmit broadcast messages via WiFi transmissions with low power so that the reception range is limited, thereby providing a short-range radio signal with a range similar to that of Bluetooth LE transmissions. In utilizing various wireless broadcast technologies and communication protocols with wireless identity transmitters, proximity broadcast receivers with limited capabilities may still be capable of receiving and processing broadcast messages from wireless identity transmitters. For example, a smartphone configured to operate as a mobile proximity broadcast receiver and including a WiFi transceiver but not a Bluetooth LE radio may receive and process broadcast messages from a wireless identity transmitter configured to broadcast short-range signals with a WiFi radio. In some embodiments, wireless identity transmitters may broadcast over multiple radios, such as a Bluetooth LE transceiver and a low-power WiFi transceiver, in order to enable more models of proximity broadcast receivers (e.g., more types of smartphones) to receive and relay sightings.

In other embodiments, wireless identity transmitters may include sensors that generate sensor data that may be encoded in broadcast messages. Such sensors data may include microphones, cameras, pressure sensors, heat sensors, accelerometers, humidity sensors, temperature sensors, carbon dioxide (CO2) sensors, etc. Data from such sensors may be used or stored by proximity broadcast receivers or a central server receiving the data via sighting messages from proximity broadcast receivers.

The various embodiment methods may determine wireless identity transmitters are within proximity of proximity broadcast receivers, and vice versa, based on the receipt of short-range wireless broadcast messages. Further, embodiments may not require determining exact locations for wireless identity transmitters and/or proximity broadcast receivers but instead may determine approximate and/or relative locations of devices between each other. Accordingly, references to determining location and/or distance throughout the disclosure may be for the purpose of determining proximity between signaling devices.

In various embodiments, companies, organization and institutions (e.g., schools, stores, parks, airports, shopping malls, office buildings, etc.) may deploy stationary proximity broadcast receivers to receive and relay broadcast messages from users' wireless identity transmitters. Alternatively, places may deploy stationary wireless identity transmitters and users' mobile proximity broadcast receivers may receive and relay broadcast messages. In further embodiments, places may employ both proximity broadcast receivers and wireless identity transmitters to receive, relay, and process data from both users carrying wireless identity transmitters and/or mobile proximity broadcast receivers. Regardless of the source of broadcast messages, the central server (or a local computing device) may determine approximate proximities between a proximity broadcast receiver and a wireless identity transmitter based on received sighting messages.

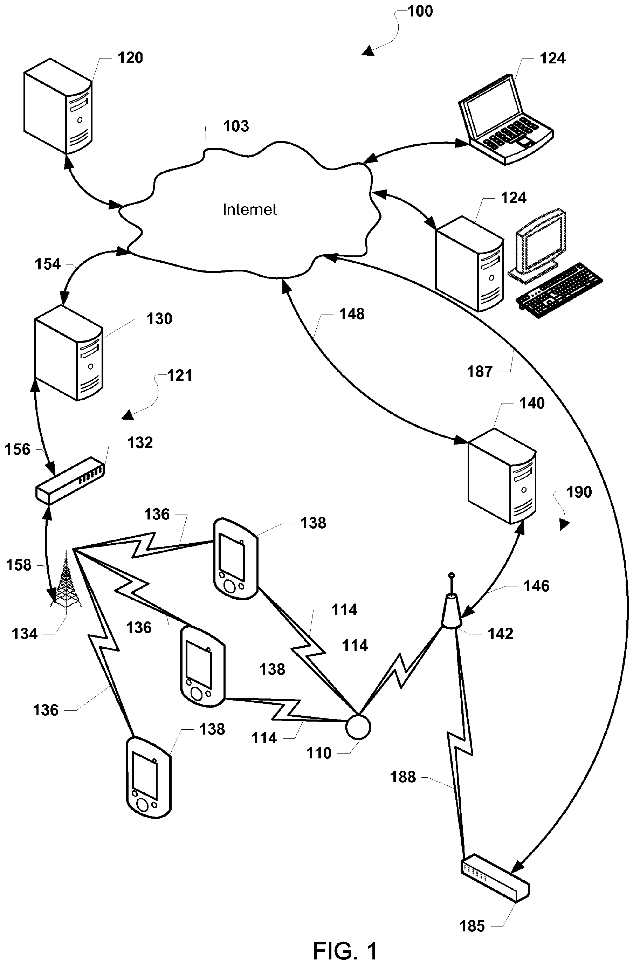

FIG. 1 illustrates an exemplary communication system 100 that may be used in various embodiments. The communication system 100 effectively enables wireless identity transmitters 110 (e.g., Bluetooth® LE transmitters) to transmit broadcast messages that include identification information to the central server 120 via a plurality of mobile proximity broadcast receivers 138 and/or stationary proximity broadcast receivers 142, without the need to negotiate a direct communication link. Such broadcast messages may be collected automatically by any proximity broadcast receiver within proximity (or broadcast range) of wireless identity transmitters 110. For example, a mobile proximity broadcast receiver 138 within a certain proximity may receive a broadcast message transmitted by a Bluetooth® radio within the wireless identity transmitter 110.

The communication system 100 may include a wireless identity transmitter 110. The wireless identity transmitter 110 may be coupled with various objects. For example, it may be embedded in a bracelet. The wireless identity transmitter 110 may transmit a short-range wireless signal 114, such as a broadcast message as described above. For example, this short-range wireless signal 114 may be a periodic broadcast of a packet, which includes the wireless identity transmitter's identification code. Alternately, the short-range wireless signal 114 may be an attempt to establish a wireless communication link with any of a plurality of mobile devices 138 that may be acting as proximity broadcast receivers. The short-range wireless signal 114 may be received by proximate proximity broadcast receivers, such as stationary proximity broadcast receivers 142 and/or mobile proximity broadcast receivers 138.

The short-range wireless signal 114 may be according to any of a variety of communication protocols, such as Bluetooth^{®}, Bluetooth LE^{®}, Wi-Fi, infrared wireless, induction wireless, ultra-wideband (UWB), wireless universal serial bus (USB), Zigbee®, Peanut ®, or other short-range wireless technologies or protocols which have or which can be modified (e.g., by restricting transmit power) to limit their effective communication range to relatively short range (e.g., within about 100 meters). In some embodiments, the wireless identity transmitter 110 may use the low energy technology standardized in the Bluetooth® 4.0 protocol (or later versions). For example, in some embodiment systems a wireless identity transmitter 110 may periodically broadcast identification packets configured as an advertiser as described in the Bluetooth® 4.0 protocol, and proximate proximity broadcast receivers 142, 138 may be configured to act as scanners according to that protocol.

The Bluetooth® protocol and Bluetooth® devices (e.g., Bluetooth LE devices) have a relatively short effective communication range, are widely used in deployed communication and computing devices, have standard advertising or pairing procedures that meets the discovery and reporting needs of various embodiments, and exhibit low power consumption, which make the protocol ideal for many applications of the various embodiments. For this reason, Bluetooth® and Bluetooth LE protocols and devices are referred to in many of the examples herein for illustrative purposes. However, the scope of the claims should not be limited to Bluetooth® or Bluetooth LE devices and protocol unless specifically recited in the claims. For example, Peanut® transceivers may be included within wireless identity transmitters 110 and may be used to transmit two-way communications with proximity broadcast receivers 142, 138 also configured to utilize Peanut® short-range radio transmissions.

The communication system 100 may include a plurality of stationary proximity broadcast receivers 142, which may be deployed by authorities, merchants, or various third-parties throughout a region, building, or place. Such stationary proximity broadcast receivers 142 may be designed specifically for wireless identity transmitters 110 (or include such tracking functions in addition to other primary functionality, such as traffic lights, utility transformers, etc.). Stationary proximity broadcast receivers 142 may be located in strategic locations within a locality, such as forming a perimeter about a community and/or being located in high traffic areas (e.g., major intersections and highway on-ramps). The stationary proximity broadcast receivers 142 may be in communication with a local area network 190, such as a WiFi network, that may include an Internet access server 140 that provides a connection 148 to the Internet 103. Stationary proximity broadcast receivers 142 may be connected to the local area network 190 by a wired or wireless link 146. In various embodiments, the stationary proximity broadcast receivers 142 may be contained within or located nearby the Internet access server 140. For example, the stationary proximity broadcast receivers 142 may be components within the Internet access server 140 or alternatively, may be placed on top of or to the sides of the Internet access server 140. In some embodiments, stationary proximity broadcast receivers 142 may be located in strategic places within a locality, such as forming a perimeter about a community and/or being located in high traffic areas (e.g., along aisles of a retail store, at entry ways to buildings, etc.). In some embodiments, stationary proximity broadcast receivers 142 may have additional functionality. For example, stationary proximity broadcast receivers 142 may also function as or be included within cash registers, point-of-sale devices, and/or display units within a retail store.

The communication system 100 may also include one or more mobile devices configured to act as mobile proximity broadcast receivers 138. The mobile proximity broadcast receivers 138 may be typical mobile devices or smartphones communicating with a cellular network 121 via long range wireless links 136 to one or more base stations 134 coupled to one or more network operations centers 132 by a wired or wireless connection 158. Such cellular network 121 may utilize various technologies, such as 3G, 4G, and LTE. The network operations centers 132 may manage voice calls and data traffic through the cellular network 121, and typically may include or may be connected to one or more servers 130 by a wired or wireless connection 156. The servers 130 may provide a connection 154 to the Internet 103. In the various embodiments, the mobile proximity broadcast receivers 138 may be mobile devices configured by an application or other software module to act as proximity broadcast receivers to relay reports of received broadcast messages from wireless identity transmitters 110 (i.e., sighting messages) to the central server 120 by way of the Internet 103.

Proximity broadcast receivers 138, 142 may be configured to report contacts (or sightings) with a wireless identity transmitter 110 to a central server 120 via the Internet 103. For example, the proximity broadcast receivers 142 may transmit a sighting message to the central server 120 that includes a rolling identifier corresponding to the identity of a user of the wireless identity transmitter 110. Each time a proximity broadcast receiver 138, 142 receives an identifier from a wireless identity transmitter 110, the identifier may be associated with the time of the connection and the location of the proximity broadcast receiver 138, 142, and this information may be transmitted to the central server 120, such as within a sighting message. In some embodiments, the identifier, the time, and the location of the contact may be stored in the memory of the proximity broadcast receiver 138, 142 (or an intermediary server 130, 140) for later reporting, such as in response to a query message broadcast or multicast by the central server 120. Also, the central server 120 may store location information reported by sighting messages in a database, which may be used for locating, tracking or otherwise monitoring movements of the wireless identity transmitter 110.

In some embodiments, mobile proximity broadcast receivers 138 may be configured to exchange short-range wireless signals 189 with stationary proximity broadcast receivers 142. In other words, a mobile proximity broadcast receiver 138 may be configured to operate as a wireless identity transceiver that is capable of receiving short-range wireless signals 114 (i.e., broadcast messages) from the wireless identity transmitter 110 as well as transmitting short-range wireless signals 189 for receipt by proximity broadcast receivers 142.

In some embodiments, proximity broadcast receivers 142 may transmit wireless signals 188 to a wireless router 185, such as part of the local area network 190, which may provide a connection 187 to the Internet 103. For example, the stationary proximity broadcast receivers 142 may transmit sighting messages that include data from broadcast messages transmitted by the wireless identity transmitter 110 to a WiFi wireless router 185.

The central server 120 may also be connected to the Internet 103, thereby allowing communication between proximity broadcast receivers 142, 138 and the central server 120. As described above, the central server 120 may include a plurality of components, blades, or other modules to process sighting messages and data received from proximity broadcast receivers 142, 138. Further embodiments may provide a direct connection (not shown) between the central servers 120 and any of the mobile device network components, such as the network operations centers 132, to more directly connect the proximity broadcast receivers 142, 138 and the central servers 120.

The communication system 100 may also include computing terminals 124, such as personal computers at home or work, through which users may communicate via the Internet 103 with the central server 120. Such terminals 124 may allow users, such as parents, police, fire, medical attendants, and other authorized authorities to register devices (e.g., wireless identity transmitters 110), access tracking records on the central servers 120, and/or to request that the central server 120 initiate a search for a particular wireless identity transmitter 110. In some embodiments, users may use such terminals 124 to register wireless identity transmitters 110, proximity broadcast receivers 142, 138 (e.g., smartphones configured to execute client software associated with the central server), and/or identity transceivers (not shown), such as by accessing web portals and/or user accounts associated with the central server 120. Similarly, third-parties, such as merchants, may use terminals 124 to register wireless identity transmitters 110, proximity broadcast receivers 142, 138 (e.g., stationary receivers configured to execute client software and relay broadcast to the central server), and/or identity transceivers (not shown).

Based on the location of the proximity broadcast receivers 138, 142 within a place, multiple proximity broadcast receivers 138, 142 may be within the broadcast area of the wireless identity transmitter 110 and may concurrently receive broadcast messages. The central server 120 may detect when proximity broadcast receivers 138, 142 concurrently (or within a certain time period) transmit sighting messages that indicate receipt of broadcast messages from the wireless identity transmitter 110. Such concurrent sighting messages may be used to determine more precise proximity information relating to the wireless identity transmitter at the time of broadcasting.

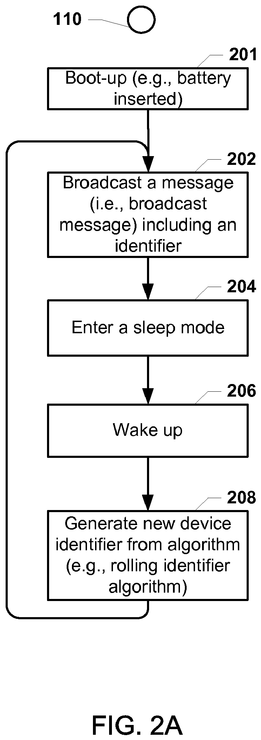

FIG. 2A illustrates an embodiment method 200 for implementation in a wireless identity transmitter 110 (referred to as "WIT" in FIG. 2A), a proximity broadcast receiver 142, and a central server 120. In block 201, the wireless identity transmitter may boot-up. In other words, the wireless identity transmitter may be energized, initialized, and otherwise configured to operate from a hibernating, sleep, dormant, or otherwise deactivated state. In various embodiments, the boot-up operations may be performed in response to a user input (e.g., a button press), the insertion of a battery in the wireless identity transmitter, or receiving a short-range wireless signal (e.g., an activation signal). In block 202, a wireless identity transmitter 110 may broadcast a message that includes an identifier, such as a broadcast message as described above. For example, the wireless identity transmitter 110 may broadcast a Bluetooth LE advertising packet that includes a rolling identifier as described herein. This may be accomplished in block 202 by a microcontroller within the wireless identity transmitter 110 determining that it is time to broadcast its identifier, configuring a suitable broadcast message (e.g., an advertisement packet as specified for Bluetooth LE devices in the Bluetooth®4.0 protocol), and transmitting that packet via a short-range radio.

In various embodiments, the message broadcast by the wireless identity transmitter (i.e., the broadcast message) may include an identifier segment, such as a rolling identifier. In various embodiments, the broadcast message may also include additional segments, such as a type segment. The type segment may indicate the type of wireless identity transmitter. For example, wireless identity transmitters may be marketed for various purposes, such as child safety devices, dog collars, or security tags for stores. The wireless identity transmitters may have a different type segment based on the intended purpose (e.g., one code for child safety devices, a second code for dog collars, etc.). Type segments may be static and set by manufacturers, while the remaining portion of the identifier may be unique to each device, and may roll as described below. The type segment may also be changed by a user, such as when a wireless identity transmitter is reset for a different purpose or application.

In other embodiments, a broadcast message may also include one or more static or dynamic segments with instructions or commands to be implemented by a proximity broadcast receiver. Such command segments may also be passed along to instruct a central server or other network device. Command segments may be set or static, similar to type segments, or may vary over time based on various conditions, such as pairings or data from one or more proximity broadcast receivers. Such command settings may also be configured by a user of the wireless identity transmitter. Second or additional segments may also indicate the status of the wireless identity transmitter. For example, a second segment may indicate the remaining power or estimated time left before the battery dies. Proximity broadcast receivers or a central server may interpret this status and respond accordingly.

Returning to FIG. 2A, in block 204, the wireless identity transmitter 110 may enter a sleep mode. For example, after broadcasting the broadcast message having the identifier, the wireless identity transmitter 110 may be configured to enter a power conservation state that may continue for a predetermined period of time. In various embodiments, the wireless identity transmitter 110 may sleep for a predetermined time, never sleep, or sleep for varying times determined based on various inputs. In block 206, the wireless identity transmitter 110 may wake up from the sleep mode, such as after the predetermined duration expires. In block 208, the wireless identity transmitter 110 may generate a new device identifier from an algorithm, such as a rolling identifier algorithm. For example, the wireless identity transmitter 110 may generate a rolling identifier using a pseudo-random function or a streaming-like encryption algorithm (e.g., AES-CTR), as described below. The wireless identity transmitter 110 may then return to block 202 to broadcast again. In some embodiments, the broadcast message may contain timing, counter, count-down, or scheduling information indicating the availability of the wireless identity transmitter for receiving messages. For example, the broadcast message may indicate that the wireless identity transmitter will accept incoming configuration messages within a specified time window. In various embodiments, the operations in blocks 202-208 may be performed by an identity transceiver (e.g., a smartphone configured to operate as both an identity transmitter and a proximity broadcast receiver).

As mentioned above, the algorithm (or rolling identifier algorithm) used in block 208 may generate a rolling identifier which is very difficult to predict or recognize by a device or system that does not know either an identity of the wireless identity transmitter 110 (e.g., a media access control address (MAC) or Bluetooth ID), a decode key, and/or the algorithm used to generate the rolling identifier. As discussed below, the central server 120, configured with the algorithm (or a decoding algorithm) or a decode key, and in possession of the wireless identity transmitter 110 identities, can use the rolling identifier to determine a corresponding account or device identity. While method 200 shows the rolling identifier changing with every wake and broadcast cycle as one example, in other embodiments the identifier may be changed less frequently, such as once per minute, once per hour, etc. In such embodiments, the operation of generating a new identifier in block 208 may be performed only at the designated interval, so at other times upon waking (i.e., block 206) the wireless identity transmitter 110 may return to block 202 to broadcast the identifier. Various algorithms for generating rolling identifiers or other encoded identifiers are discussed in the related applications incorporated by reference above.

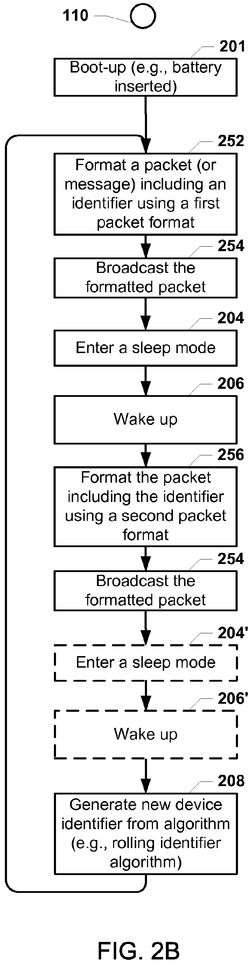

FIG. 2B illustrates an embodiment method 250 for a wireless identity transmitter 110 (referred to as "WIT" in FIG. 2B) to broadcast messages of different packet formats. In block 201, the wireless identity transmitter may boot-up. In block 252, the wireless identity transmitter 110 may format a packet (i.e., a broadcast message) that includes an identifier, such as a broadcast message as described above, using a first packet format (e.g., a first structure). For example, the wireless identity transmitter 110 may format a packet or message that includes an obscured device identifier based on a certain Bluetooth specification. The first packet format may be a format, pattern, or other structure that is associated with particular standards or software implementations (e.g., software, firmware, operating system routines, etc.) executing on proximity broadcast receivers. For example, the first packet format may be a manner of structuring data within an advertising packet that is well-suited, optimized, or otherwise easily received and processed by signal monitoring services executing on popular smartphones (i.e., a first software implementation). In some embodiments, the packet may or may not include a rolling or obscured identifier when formatted in the first packet format. In another embodiment, the packet may not include a service UUID (e.g., a Bluetooth SIG specified universal unique identifier), or alternatively may include a service UUID that has a length of zero, when formatted in the first packet format.

In block 254, the wireless identity transmitter may broadcast the formatted packet, such as by transmitting the formatted Bluetooth advertising packet using a Bluetooth transceiver. As described above, in block 204, the wireless identity transmitter 110 may enter a sleep mode, and may wake up from the sleep mode in block 206, such as after the expiration of a predefined period (e.g., 50 ms, 60 ms, etc.).

In block 256, the wireless identity transmitter may format the packet including the identifier using a second packet format. The operations in block 256 may be similar to those in block 252, except the second packet format may be of a different pattern, structure, or organization of the data than the first packet format and may be associated with different software implementations executing on proximity broadcast receivers. For example, the second packet format may be associated with a second software implementation (e.g., a firmware, an application, an instruction set, a routine, a service, a process, a thread, an operating system, etc.) executing on a proximity broadcast receiver (e.g., a smartphone proximity broadcast receiver) that is different from a first software implementation associated with the first packet format. In some embodiments, the packet may include a service UUID (or a service UUID having a length of greater than zero) when formatted in the second packet format.

The wireless identity transmitter 110 may broadcast the formatted message in block 254. As described above, in optional block 204', the wireless identity transmitter 110 may enter a sleep mode, such as a second period of sleeping or performing a busy cycle, and may wake up from the sleep mode in optional block 206', such as after the expiration of another predefined period (e.g., 50 ms, 60 ms, etc.). The time periods associated with the sleep operations in block 204 and optional block 204' may be the same or alternatively different periods of time, and the sleep and wake operations of optional blocks 204, 204' and 206, 206' may be configured to cause the wireless identity transmitter 110 to broadcast messages of different packet structures/ types at various intervals that may correspond to the capabilities of proximate broadcast receivers. For example, based on known processing rates of the routines, applications, or operating system operations of a particular smartphone proximity broadcast receiver, the wireless identity transmitter 110 may wait a certain number of milliseconds in between broadcasting a first message of a first packet format and a second message of a second packet format to ensure receipt and efficient handling of the different packets. In other words, the wireless identity transmitter 110 may utilize a first delay in between broadcasting the message of the first packet format and the message of the second packet format as well as a second delay before returning to broadcast the message of the first packet format again. In block 208, the wireless identity transmitter 110 may generate a new device identifier (e.g., a rolling identifier) from an algorithm, and may then return to block 252 to broadcast again using the first packet format.

In some embodiments, the wireless identity transmitter 110 may be configured to transmit messages of a plurality of different packet types or packet formats to get improved performance on firmware or operating systems of various devices. For example, the wireless identity transmitter may be configured to broadcast a first message formatted in a first packet format known to be well-suited (or optimized) for iPhones (or iOS devices), a second message formatted in a second packet format known to be well-suited (or optimized) for Androids (or Android devices), and a third message formatted in a third packet format that may support communication of data relevant to wireless identity transmitters, such as sensor data and rolling identifiers.

As mentioned above, the rolling identifier and other information may be communicated within the payload of a Standard Bluetooth LE message packet format (or packet type). FIG. 3A illustrates an example Bluetooth LE message structure implementing an embodiment rolling identifier. A broadcast message 300 according to an embodiment may include the addresses and headers of an ordinary Bluetooth LE message, data fields 302 through 308, and include device information and the rolling identifier within the payload portion or advertised data field 310 of the Bluetooth message. For example, a broadcast message 300 may include the standard access address data field 302, which may be 4 bytes of information identifying the type of Bluetooth message that is being transmitted, in this case, a non-connectable advertising event. The next block of data in the broadcast message 300 may be an advertised packet data unit type 304 (e.g., one byte of data), which may be followed by an advertised packet data unit header 306, which in turn is followed by an advertised packet data unit address 308, which may be 6 bytes of data. The standard Bluetooth data fields 302 through 308 basically identify the message as a non-connectable advertising event, which is followed by an advertised data field 310 in which is included any data that is being transmitted as well as the unique rolling identifier.

The advertised data field 310 of the broadcast message 300 may incorporate the broadcast information and rolling identifier in two data fields 320 and 322 (or portions). In advertising type Bluetooth LE packets, any type of advertising data may be included, providing flexibility for including the rolling identifier and other data within the broadcast message 300. In an example embodiment illustrated in FIG. 3A, a service universally unique user identifier (UUID) data field 320 may be used to convey sensor or other data from the wireless identity transmitter, such as the battery state and temperature as illustrated in FIG. 3A. For example, the data field 320 may include a standard Bluetooth data field 330 that indicates the length of the data field, such as 11 HEX as illustrated in FIG. 3A, which indicates that this portion of the message is 17 bytes long, which may be followed by a data type field 332 that provides a code indicating the type of information that follows in the subsequent bytes of information.

Following these header fields 330, 332 may be the data field 334. This data field 334 may include a code in the form of a universally unique value that may be used as a table lookup key to obtain the intended meaning for the code. For example, globally unique identifier numbers (i.e., UUIDs) may be generated according to the procedures for creating UUIDs, which may then be linked to particular meanings, values, alerts, and/or commands in a corresponding database and may be maintained by the central server. Thus, a valid UUID may be included in the service UUID field 334 that complies with the Bluetooth protocol but identifies a particular message or condition rather than functioning as a normal address or identifier of the device. For example, a UUID may be linked in a database to a particular battery level and temperature value or range. In this manner, the standard UUID portion of the broadcast message 300 can be used to convey a large number of meanings, values, alerts, or commands without varying from the standard Bluetooth protocol. It may also be possible to include raw data or sensor data in the service UUID data field 334, although such raw data would not comply with the Bluetooth protocol that this data represent a universally unique identifier.

Instead of linking UUIDs to a data table in a random manner, a standard format for UUIDs may be used to provide data fields within a range of generated UUIDs. For example, FIG. 3A illustrates and embodiment in which the service UUID data field 334 includes a 22 bit UUID prefix 340 and a 12 byte suffix 346 between which three bytes of data to be transmitted are included, such as a battery level value data field 342 and a temperature value data field 344. In this example, 1024 different UUIDs may be generated that include the same UUID prefix 340 value and the same UUID suffix value. This data structure then provides for three bytes of data in between the prefix and suffix for carrying data, such as two bytes to indicated the wireless identity transmitter's battery level (data field 342) and one byte for indicating a measured temperature (data field 344). This data structure is provided as an example, and many other data structures may be use and different types of information (or no information) may be communicated in this manner.

Following the service UUID data field 320 is a data field 322 in which the rolling identifier can be included. For example, this identifier data field 322 may include a packet length of byte 335 that identifies the number of bytes of data within the packet. The data field may be followed by a packet type field 336, which includes a code indicating the type of information that follows, in this case that the data field is manufacture specific. These header data fields may be followed by a manufacture ID field 337 that includes 2 bytes of data (for example) that may be used to identify the manufacturer or type of wireless identity transmitter, a service provider for the system, etc.

The rolling identifier may be included in a final data field 338 of the message 300. Various methods for generating the rolling identifier included in the final data field 338 are described in the related applications incorporated by reference into this document. For example, this data field 338 may include a nonce (e.g., a timer, nonce, or counter) and an obscured "blob" generated using the nonce, a key known only to the wireless identity transmitter and the central server, and the unique (e.g., MAC address) identifier of the wireless identity transmitter. As another example discussed above, this data field 338 may include a single "blob" that was generated using a counter/clock/nonce, a security key known to the known only to the wireless identity transmitter and the central server, and the unique (e.g., MAC address) identifier of the wireless identity transmitter.

In various embodiments, the length of the rolling identifier included in the final data field 322 may be increased by reducing the number of bytes of data included in the service UUID data field 320 for communicating data (i.e., data field 334).

FIG. 3B illustrates another example Bluetooth LE message structure implementing an embodiment rolling identifier. A broadcast message 350 according to an embodiment may include the addresses and headers of an ordinary Bluetooth LE message, data fields 302 through 308, and include device information and the rolling identifier within the payload portion or advertised data field 310 of the Bluetooth message. For example, a broadcast message 350 may include the standard access address data field 302, which may be 4 bytes of information identifying the type of Bluetooth message that is being transmitted, in this case, a non-connectable advertising event. The next block of data in the broadcast message 350 may be an advertised packet data unit type 304 (e.g., one byte of data), which may be followed by an advertised packet data unit header 306, which in turn is followed by an advertised packet data unit address 308, which may be 6 bytes of data. The standard Bluetooth data fields 302 through 308 basically identify the message as a non-connectable advertising event, which is followed by an advertised data field 310 in which is included any data that is being transmitted as well as the unique rolling identifier.

The advertised data field 310 of the broadcast message 350 may incorporate the broadcast information and rolling identifier in two data fields 352 and 354 (or data portions). In advertising type Bluetooth LE packets, any type of advertising data may be included, providing flexibility for including the rolling identifier and other data within the broadcast message 350. The message 350 may include a service universally unique user identifier (UUID) data field 352. For example, the data field 352 may include a standard Bluetooth data field 356 that indicates the length of the data field, which may be followed by a data type field 358 that provides a code indicating the type of information that follows in the subsequent bytes of information. Following these header fields 356, 358 may be portion 360 with a code in the form of a universally unique value (i.e., UUID) that can be used as a table lookup key to obtained the intended meaning for the code.

Following the service UUID data field 352 is a data field 354 (i.e., manufacturer data) in which the rolling identifier can be included. For example, this data field 354 may include a packet length of a byte 362 that identifies the number of bytes of data within the packet. The data field may be followed by a packet type field 364, which includes a code indicating the type of information that follows. These header data fields may be followed by a manufacture ID field 366 that includes 2 bytes of data (for example) that may be used to identify the manufacturer or type of wireless identity transmitter, a service provider for the system, etc. The rolling identifier may be included in a final portion 368 of the message 350 that may include battery, temperature, and other sensor data along with rolling identifier information.

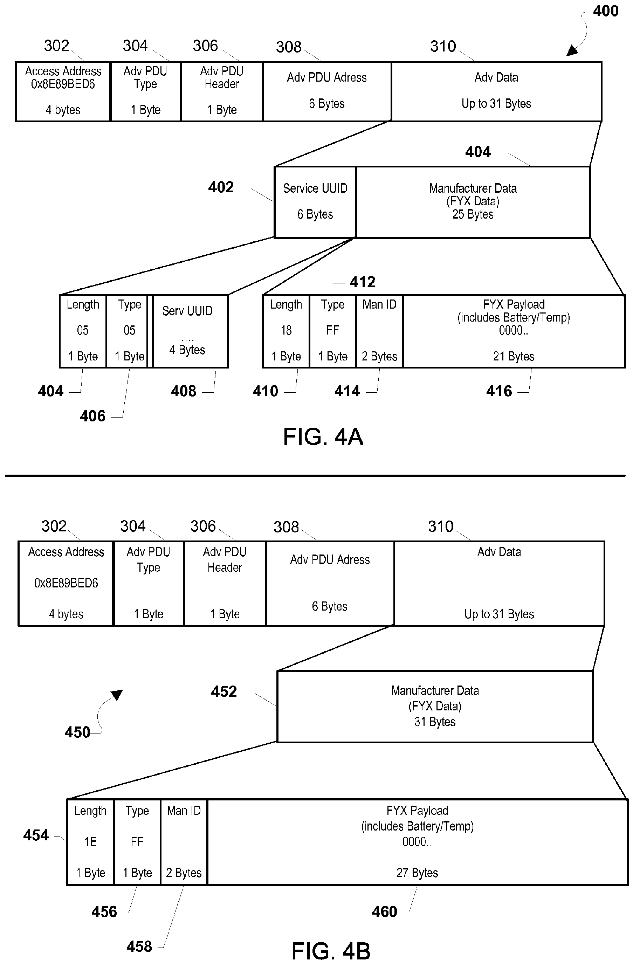

FIG. 4A illustrates another example Bluetooth LE message structure implementing an embodiment rolling identifier. A broadcast message 400 according to an embodiment may include the addresses and headers of an ordinary Bluetooth LE message, data fields 302 through 308, and include device information and the rolling identifier within the payload portion or advertised data field 310 of the Bluetooth message. For example, a broadcast message 400 may include the standard access address data field 302, which may be 4 bytes of information identifying the type of Bluetooth message that is being transmitted, in this case, a non-connectable advertising event.

The next block of data in the broadcast message 400 may be an advertised packet data unit type 304 (e.g., one byte of data), which may be followed by an advertised packet data unit header 306, which in turn is followed by an advertised packet data unit address 308, which may be 6 bytes of data. In this embodiment, the standard Bluetooth data fields 302 through 308 basically identify the message as a non-connectable advertising event, which is followed by an advertised data field 310 in which is included any data that is being transmitted as well as the unique rolling identifier.

The advertised data field 310 of the broadcast message 400 may incorporate the broadcast information and rolling identifier in two data fields 402 and 404 (or portions). In advertising type Bluetooth LE packets, any type of advertising data may be included, providing flexibility for including the rolling identifier and other data within the broadcast message 400. The message 400 may include a service universally unique user identifier (UUID) data field 402. For example, the data field 402 may include a standard Bluetooth data field 404 that indicates the length of the data field, which may be followed by a data type field 406 that provides a code indicating the type of information that follows in the subsequent bytes of information. Following these header fields 404, 406 may be a data field portion 408 with a code in the form of a universally unique value (i.e., UUID) that can be used as a table lookup key to obtained the intended meaning for the code.

Following the service UUID data field 402 may be another data field 404 (i.e., manufacturer data) in which the rolling identifier can be included. For example, this data field 404 may include a packet length of a byte 410 that identifies the number of bytes of data within the packet. The data field may be followed by a packet type field 412, which includes a code indicating the type of information that follows. These header data fields may be followed by a manufacture ID field 414 that includes 2 bytes of data (for example) that may be used to identify the manufacturer or type of wireless identity transmitter, a service provider for the system, etc. The rolling identifier may be included in a final portion 416 of the message 400 that may include battery, temperature, and other sensor data along with rolling identifier information.

FIG. 4B illustrates another example Bluetooth LE message structure implementing an embodiment rolling identifier. A broadcast message 450 according to an embodiment may include the addresses and headers of an ordinary Bluetooth LE message, data fields 302 through 308, and include device information and the rolling identifier within the payload portion or advertised data field 310 of the Bluetooth message. For example, a broadcast message 450 may include the standard access address data field 302, which may be four bytes of information identifying the type of Bluetooth message that is being transmitted, in this case, a non-connectable advertising event. The next block of data in the broadcast message 450 may be an advertised packet data unit type 304 (e.g., one byte of data), which may be followed by an advertised packet data unit header 306, which in turn is followed by an advertised packet data unit address 308, which may be 6 bytes of data. In this embodiment, the standard Bluetooth data fields 302 through 308 basically identify the message as a non-connectable advertising event, which is followed by an advertised data field 310 in which may be included any data that is being transmitted as well as the unique rolling identifier.

The advertised data field 310 of the broadcast message 450 may incorporate the broadcast information and a rolling identifier in a single data portion 452. The data portion 452 (i.e., manufacturer data) may include a packet length of a byte 454 that identifies the number of bytes of data within the packet. The data field may be followed by a packet type field 456, which includes a code indicating the type of information that follows. These header data fields may be followed by a manufacture ID field 458, such as 2 bytes of data for example, that may be used to identify the manufacturer or type of wireless identity transmitter, a service provider for the system, etc. The rolling identifier may be included in a final portion 460 of the message 450 that may include battery, temperature, and other sensor data along with rolling identifier information.

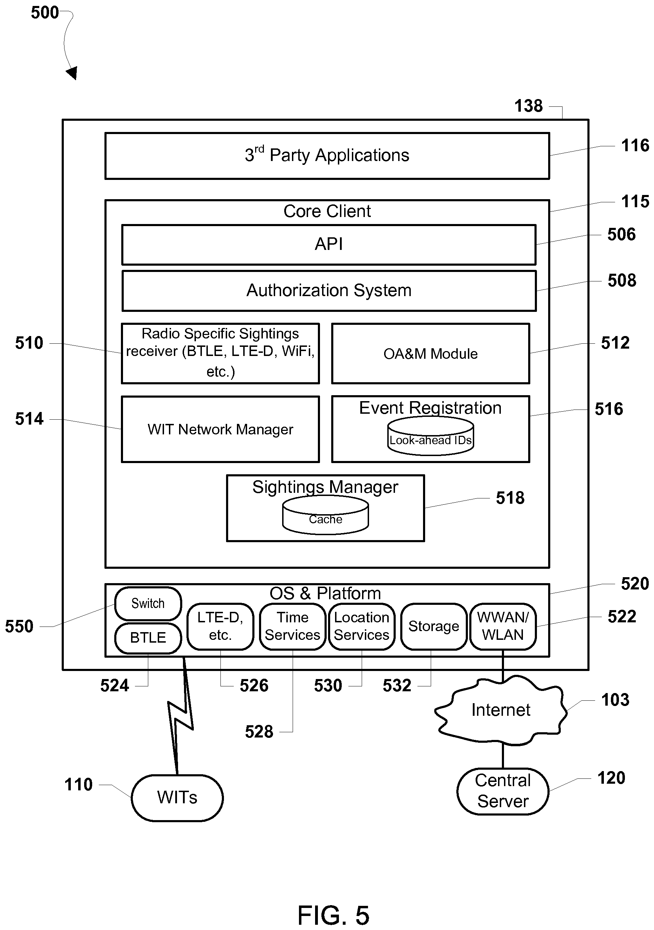

FIG. 5 illustrates a diagram 500 of various modules within a mobile proximity broadcast receiver 138. As described above, proximity broadcast receivers may include stationary proximity broadcast receivers, such as dedicated devices placed around a building, and mobile proximity broadcast receivers 138, such as mobile devices that are configured to perform operations to receive broadcast messages from wireless identity transmitters 110 and transmit sighting messages over the Internet 103 to a central server 120 via long-range communications (e.g., via WiFi or a cellular network). The various modules and components are described below in the context of elements within a mobile proximity broadcast receiver 138, however in various embodiments, any proximity broadcast receiver, such as a stationary proximity broadcast receiver, may include similar modules and/or components.

The mobile proximity broadcast receiver 138 may include a core client module 115 that may be software, instructions, routines, applications, operations, or other circuitry utilized to process received broadcast messages from proximate wireless identity transmitters 110. The core client module 115 may also handle communications between the proximity broadcast receivers 142, 138 and the central server 120, such as transmitting sighting messages and receiving return messages from the central server 120. For example, the core client module 115 may operate as a background service that performs operations, such as uploading or transmitting sighting messages, without interaction from a user.

The core client module 115 may include an API component 506 that corresponds to application programming interface data, code, or other commands related to broadcast messages and/or sighting messages. For example, the API component 506 may be utilized by a proximity broadcast receiver when listening for Bluetooth LE advertising packets received from the wireless identity transmitter 110. As another example, the API component 506 may be utilized to register the mobile proximity broadcast receiver 138 to receive notifications, alerts, or other communications corresponding to wireless identity transmitters 110.

The core client module 115 may also include an authorization system component 508 for processing received broadcast messages. For example, the mobile proximity broadcast receiver 138 may support oAuth for authorization requests and xAuth for approved communication partners.

The core client module 115 may also include a radio specific sightings receiver component 510 (e.g., a component for handling Bluetooth LE, LTE-D, WiFi, and other communications), an operations, administration, and management (or OA&M) module 512, a wireless identity transmitter network manager component 514, an event registration component 516 that relates to stored look-ahead identifiers, and a sightings manager component 518. In some embodiments, the event registration component 516 may store numerous rolling identifiers downloaded from the central server 120 and corresponding to a particular wireless identity transmitter 110, such as a set of rolling identifiers that may match possible rolling identifiers broadcast by the wireless identity transmitter 110 during a certain time window.

Like many modern mobile devices, the mobile proximity broadcast receiver 138 may be configured to execute third-party applications (or "apps"), and thus may include a third-party applications module 116 that may execute, manage, and otherwise perform software instructions and routines related to applications provided by various third-parties (e.g., merchants). For example, the third-party applications module 116 may receive various data from the core client module 115 to be used by various third-party applications. For illustration purposes, a third-party application related to a department store that is registered with the central server 120 may be configured to receive notifications from the core client module 115 when the user of the mobile proximity broadcast receiver 138 enters, remains, and/or leaves the department store (e.g., a geofence of the store). In some embodiments, for optimization purposes, applications or apps executing via the third-party applications module 116 may register or otherwise be configured to received notifications from the core client module 115 when particular wireless identity transmitters are within proximity, or alternatively, leave proximity. For example, applications may register in advance with the core client module 115 to receive event notifications that indicate whether a particular wireless identity transmitter enters proximity, stays within proximity (e.g., standing nearby and not moving), or leaves proximity.

The mobile proximity broadcast receiver 138 may also include an operating system and platform module 520 for performing various operations and managing circuitry, such as short-range signal receiver circuitry. In particular, the operating system and platform module 520 may include a Bluetooth Low Energy module 524 for processing communications utilizing Bluetooth LE protocols, a cellular network module 526 for processing communications corresponding to various cellular and similar long-range wireless networks (e.g., LTE-D, etc.).

In some embodiments, the operating system and platform module 520 may include a switch module 550 for monitoring for reception of different types of packets, such as a first and a second type of Bluetooth advertising packet as described herein. The switch module 550 may be configured to indicate, transfer, and/or notify various modules within the proximity broadcast receiver 138, such as by indicating to third-party applications module 116 and/or the core client module 115 when data packets of particular types are received.

The operating system and platform module 520 may also include a time services component 528 that may track time and generate timestamp data, a location services component 530 that may maintain low-precision location data or alternatively more precise GPS (or A-GPS) location data, a storage component 532, and a wireless wide area network/ wireless local area network component 522 for enabling communications via WiFi or other wireless networks.

In some embodiments, the core client module 115 may request from the central server sets of wireless identity transmitter identifiers (e.g., rolling identifiers of all transmitters on an interested list, identifiers for all transmitters owned by a user, etc.). Such sets may correspond to wireless identity transmitters that are currently in use and are expected to be in use for some period of time.

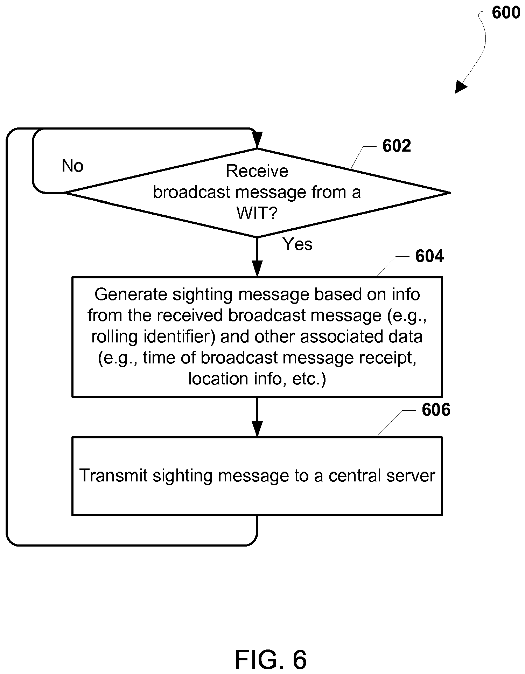

FIG. 6 illustrates an embodiment method 600 that may be implemented on a proximity broadcast receiver, such as a stationary proximity broadcast receiver or a mobile proximity broadcast receiver. In determination block 602, the proximity broadcast receiver may determine whether a broadcast message is received. For example, the proximity broadcast receiver may begin listening for broadcast advertisement packets or pairing attempts by wireless identity transmitters. The proximity broadcast receiver may continuously be in a monitoring mode, or begin listening for particular identifiers in response to an alert (or search activation message) received from a central server. In embodiments in which pairing takes place, the pairing may be established automatically if the proximity broadcast receiver is set to pair with any wireless identity transmitter without using a key, by using a key saved from a previous pairing with the wireless identity transmitter, or by using a key received from a central server. If the proximity broadcast receiver does not receive a broadcast message (i.e., determination block 602 = "No"), the proximity broadcast receiver may continue with the operations in determination block 602.

If the proximity broadcast receiver receives a broadcast message (i.e., determination block 602 = "Yes"), in block 604 the proximity broadcast receiver may generate a sighting message based on information from the received broadcast message and other associated data. In particular, the sighting message may include an identifier specific to the wireless identity transmitter that transmitted the received broadcast message, such as a rolling identifier (i.e., an encoded device identifier), MAC address, or other unique code that may be used to identify the particular wireless identity transmitter. In alternate embodiments, the wireless identity transmitter's identifier may be received as part of a pairing process.

Other associated data that may be included in a sighting message may include various information related to the receipt of the broadcast message, such as the time the proximity broadcast receiver received the broadcast message, location information, the proximity broadcast receiver's identification information, related services (e.g., associated merchants), and signal strength information. In other words, the proximity broadcast receiver may associate data about present conditions (e.g., a timestamp, GPS coordinates, Cell ID of the closest base station, etc.) with the broadcast message and/or the wireless identity transmitter's identifier. This data may be stored in any of various types of data structures, such as an array with one or more identifiers associated with timestamps and GPS coordinates from when the sighting corresponding to each identifier occurred. In some embodiments, the sighting message may include authentication data, such as a digital certificate or code, that may be used by a central server to confirm the identity of the proximity broadcast receiver. For example, within the metadata of the sighting message, the proximity broadcast receiver may include a special hash code known only to the proximity broadcast receiver and the central server.

In block 606, the proximity broadcast receiver may transmit the sighting message to a central server, such as via a cellular (e.g., an LTE, 3G, or 4G network) or other network and the Internet as discussed above with reference to FIG. 1. Upon reporting a contact event by transmitting the sighting message, the proximity broadcast receiver may promptly return to perform the operations in determination block 602 and await further broadcasts from wireless identity transmitters. This enables the proximity broadcast receiver to continuously report contact events to the central server.

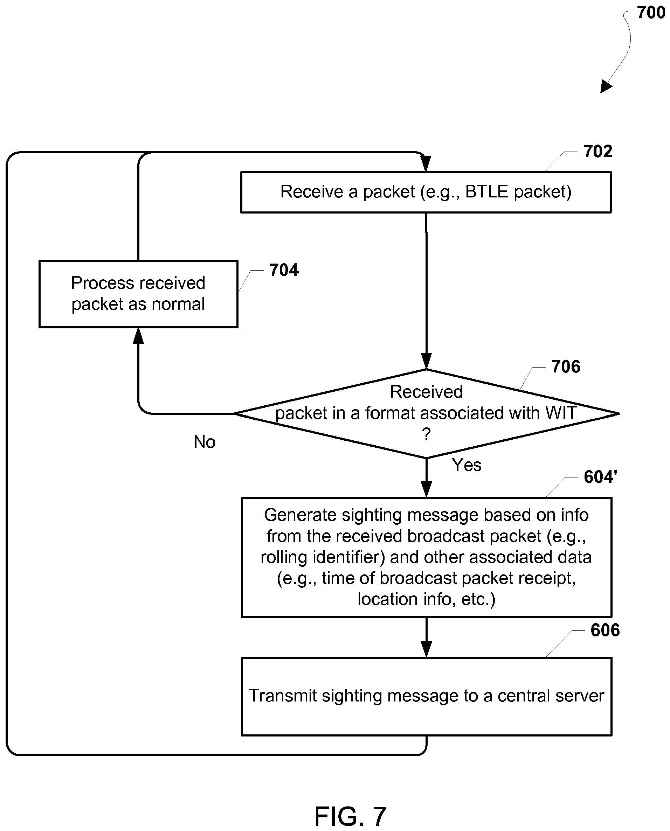

FIG. 7 illustrates an embodiment method 700 for a mobile proximity broadcast receiver to relay a wireless identity transmitter's identifier based on a determined packet format (or packet type). In block 702, the proximity broadcast receiver may receive a packet, such as a Bluetooth LE broadcast message transmitted by a wireless identity transmitter within proximity. In determination block 706, the proximity broadcast receiver may determine whether the received packet is of a packet format associated with a wireless identity transmitter. For example, the proximity broadcast receiver may evaluate the structure of the received message to identify whether the structure matches a known or otherwise predefined pattern or structure corresponding to software implementations (e.g., firmware, applications, instruction sets, routines, services, processes, threads, operating systems, etc.) related to wireless identity transmitters, such as the packet structures described above with reference to FIGS. 3A-4B. If the proximity broadcast receiver determines that the received packet is not of the packet format associated with a wireless identity transmitter (i.e., determination block 706 = "No"), in block 704 the proximity broadcast receiver may process the received packet as normal, such as with a default firmware, application, or service associated with typical Bluetooth LE messages, and may continue with the operations in block 702.

If the proximity broadcast receiver determines that the received packet is of the packet format associated with a wireless identity transmitter (i.e., determination block 706 = "Yes"), in block 604' the proximity broadcast receiver may generate a sighting message based on information from the received broadcast packet and other associated data, as described above with reference to the operations in block 604 in FIG. 6. In block 606, the proximity broadcast receiver may transmit the sighting message to a central server.

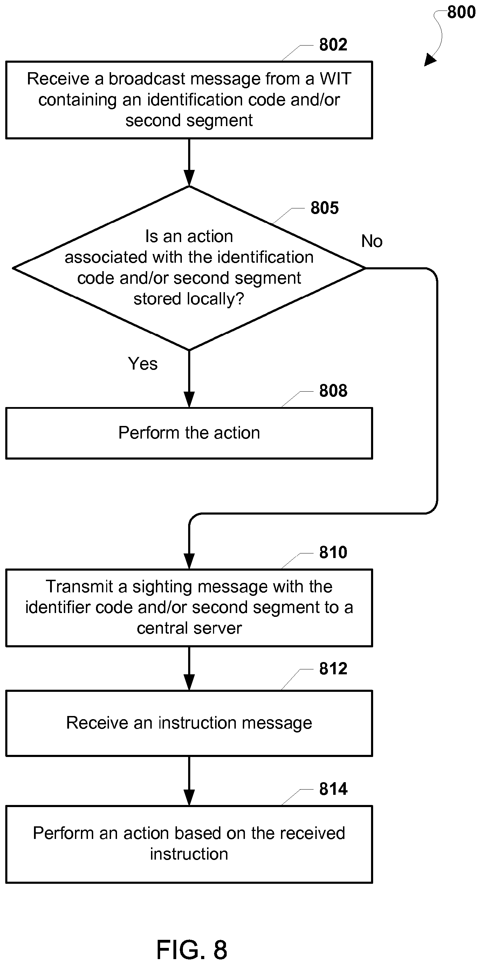

FIG. 8 illustrates an embodiment method 800 for providing content based on proximity to a wireless identity transmitter. A proximity broadcast receiver may receive a broadcast message from a wireless identity transmitter (referred to as "WIT" in FIG. 8) containing an identification code and/or second segment in block 802. The proximity broadcast receiver may determine whether an action associated with the identification code and/or second segment is stored locally (e.g., in the proximity broadcast receiver's memory) in determination block 805. If an associated action is found locally (i.e., determination block 805 = Yes), the action may be performed by the proximity broadcast receiver in block 808.

If an associated action is not found locally (i.e., determination block 805 = No), the proximity broadcast receiver may transmit a sighting message with the identifier and/or second segment to a central server in block 810. In some embodiments, the proximity broadcast receiver may transmit a message to another device, such as a user device. The proximity broadcast receiver may receive an instruction message in block 812. This instruction may be sent by the central server or other device in response to the sighting message with the identifier and/or second segment. In block 814, the proximity broadcast receiver may perform an action based on the received instruction message, such as access content by going to a web page or other online resource. In alternate embodiments, the proximity broadcast receiver may skip the determination block 805 and automatically proceed to either transmit a sighting message in block 810 or attempt to perform an action stored locally.

A proximity-based content publishing system may be used for a wide range of activities. For example, teens may carry a wireless identity transmitter with them that they point to their social networking pages (e.g., Facebook®). When they are proximate to friends, the pages can be quickly accessed on proximity broadcast receivers (i.e., mobile phones configured to operate as mobile proximity broadcast receivers). Realtors may setup a web page for a home and affix to the home's signpost a wireless identity transmitter pointing to the web page so that anyone driving by the home can access that information. Stores may include wireless identity transmitters with products to provide dynamic displays such as links to coupons, consumer reports, or additional nutritional information. If a lost dog has a wireless identity transmitter on its collar, instead of trying to wrestle the dog for access to his collar, a proximity broadcast receiver may simply access the wireless identity transmitter and send a message or call the owner.

The various features and alternative actions may enable the system to have flexible and extensible functionality. The functionality could be added later as the actions taken are controlled by applications that may be updated in proximity broadcast receivers over time.

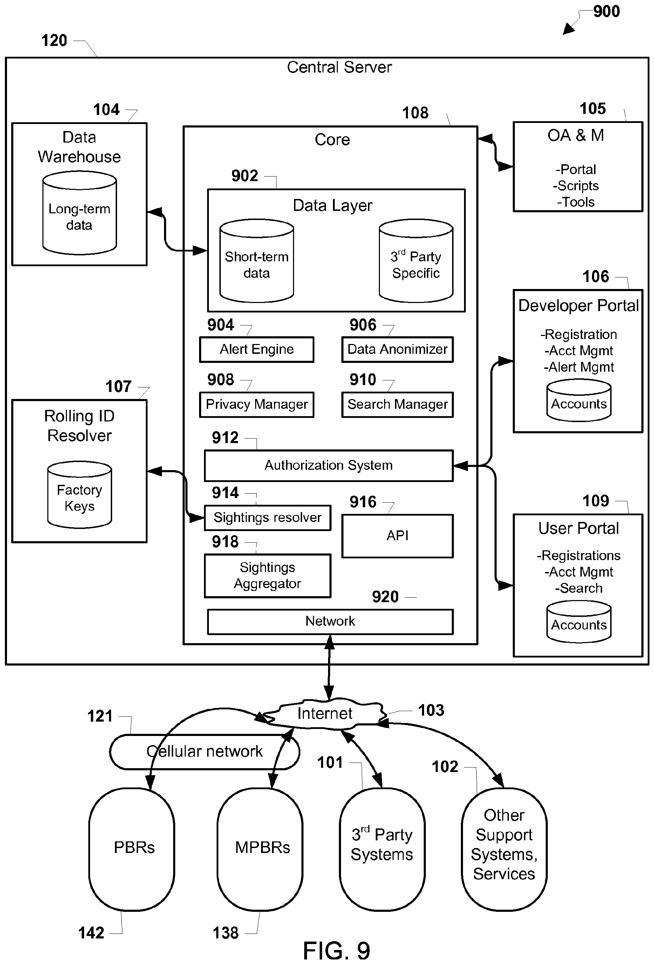

FIG. 9 illustrates a diagram 900 of various modules within a central server 120. The various modules and components are described below in the context of modules, components, and/or elements within a central server 120. However, in various embodiments, the central server 120 may include or be connected to individual computing devices, server blades, or other units that may perform the operations associated with the various modules and/or components described below.

As described above, the central server 120 may be configured to receive, store, and otherwise process data corresponding to wireless identity transmitters. For example, the central server 120 may be configured to exchange communications with various devices via the Internet 103, such as proximity broadcast receivers 142, mobile proximity broadcast receivers 138, third-party systems 101, and other support systems and/or services 102.

The central server 120 may include several components 104-109 to perform various operations to process data, such as received from proximity broadcast receivers 142, 138, third-party systems 101, or other support systems and/or services 102. In particular, the central server 120 may include a core component 108 that may process sighting messages, execute an alert or notice engine module, handle application programming interface (API) commands, and exchange data with other components within the central server 120. The core component 108 may include a data layer module 902 that may include units for storing short-term data and third-party specific data. The core component 108 may also include an alert engine module 904 for generating alert messages for transmissions to proximity broadcast receivers and initiating searches of various target wireless identity transmitters. The core component 108 may further include a data anonimizer module 906 that may generate generic, anonymous, or otherwise processed data based on privacy policies or profile preferences of users. For example, the data anonimizer module 906 may strip personal information from return messages transmitted to a proximity broadcast receiver associated with a store so that a consumer user of a wireless identity transmitter is not identified to the store, but the fact that the user is within the store is still reported to the store. The core component 108 may also include a privacy manager module 908 that may maintain privacy permission information for various users. For example, the privacy manager module 908 may include a database of privacy parameters provided by users at registration.

The core component 108 may also include a search manager module 910 for assisting in organizing and administering searches and an authorization system module 912. The core component 108 may further include a sightings resolver module 914 that may be utilized by the central server 120 for identifying wireless identity transmitters associated with broadcast messages reported within received sighting messages from proximity broadcast receivers 142, 138. The core component 108 may include an API module 916 that may include functions and interfaces for initiating operations, a sightings aggregator module 918 for compounding various sighting messages over a period for transmissions in consolidated form to merchants, third-parties, and other services. The core component 108 may also include a network module 920 for transmitting and receiving various communications with devices, such as proximity broadcast receivers 142, 138 and third-party systems 101 via the Internet.

The central server 120 may also include a data warehouse component 104 that may store long-term data (e.g., archived user data, past location information, etc.). The data warehouse component 104 may include various databases for storing information pertinent to users of wireless identity transmitters, such as profile information provided by users via registration websites. The data warehouse component 104 may be configured to exchange data with the data layer module 902 of the core component 108. The central server 120 may also include an operations, administration, and management (or OA & M) component 105 that may process and/or store software associated with user portal accesses, scripts, and tools (e.g., software utilities, routines, etc.). The OA & M component 105 may be configured to exchange data with the core component 108.

The central server 120 may also include a developer portal component 106 that may store developer account data and perform registration, account management, and alert (or notice) management routines associated with developers, such as vendors or merchants that register to interact with users of wireless identity transmitters 110. The central server 120 may also include a user portal component 109 that may store user account data and perform registration, account management, and search routines associated with users, such as persons associated with wireless identity transmitters. The user portal component 109 and developer portal component 106 may be configured to exchange data with the authorization system module 912 of the core component 108. The central server 120 may also include a rolling identifier (or ID) resolver component 107 that may store factory keys associated with wireless identity transmitters 110 as well as perform operations, software, or routines to match encrypted, encoded, rolling, or otherwise obfuscated identification information within received sighting messages with affiliated user data. The rolling identifier (or ID) resolver component 107 may be configured to exchange data with the sightings resolver module 914 of the core component 108.

In various embodiments, the modules and components described with reference to FIG. 9, such as the rolling ID resolver component 107, may be performed or otherwise enabled by software instructions, applications, routines, threads, circuitry, or hardware units.

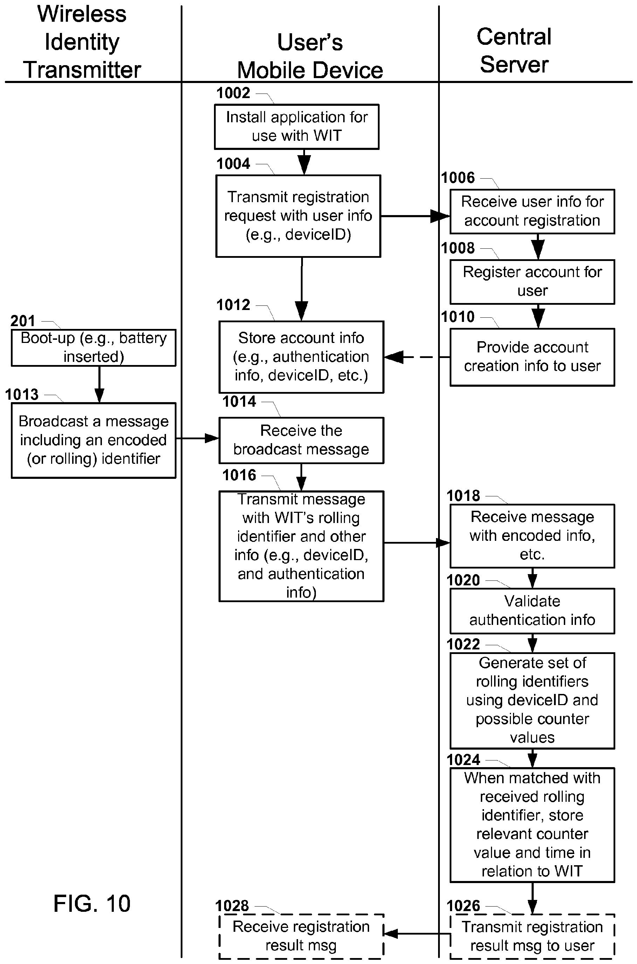

FIG. 10 illustrates a wireless identity transmitter registration process for use in various embodiments. In general, before broadcast messages may be processed by a central server, the central server may require that wireless identity transmitters and their users be registered with the central server. For example, before any tracking, searching, or other location-based activities related to a wireless identity transmitter can be initiated, the central server must be able to determine the users associated with the various wireless identity transmitters circulating in the world. Registration may create links between identifiers transmitted by wireless identity transmitters in broadcast messages, the wireless identity transmitters, and their users. For example, in order to transmit a notification to a missing child's parents that the child has been found, relayed obfuscated (or encoded) identifiers must be matched to account information that indicates the parents' cell phone numbers as stored in relation to a registered user account.

In particular, through registration, a timing mechanism may be synchronized between each wireless identity transmitter and the central server (i.e., a counter). With such a counter, a wireless identity transmitter and the central server may encode (or roll) and decode identifiers respectively, keeping the identity associated with the wireless identity transmitter (and its users) concealed and private. The most appropriate time to synchronize such a timing mechanism or counter may be during a device registration and/or account creation process as described below. For the purpose of FIG. 10, a mobile device, such as a smartphone, is described as being used by a user to perform account creation and registration operations (e.g., the mobile device accesses a web portal to register with the central server, etc.). However, any computing device connected to the Internet and capable of exchanging communications with the central server via a registration web portal or website may be relevant.

In block 1002, a user's mobile device (e.g., an iPhone, Android, tablet device, etc.) may install an application for use with wireless identity transmitters. Such an application (or "app") may execute on the mobile device's processor as a background service or alternatively may be activated for selective use by the user. As described throughout this disclosure, such an application may enable the mobile device to process short-range broadcast messages from proximate wireless identity transmitters, such as by identifying received signals as broadcast messages and relaying sighting messages having location information to the central server in response.

In block 1004, the mobile device may transmit a registration request with user information (e.g., a device identity or "deviceID"). The registration request may be sent to the central server via Internet communications with a web portal, web site, or web server controlled or otherwise accessible by the central server. In other words, the mobile device may invoke the registration process or by providing user information (e.g., device ID) through the installed app by providing the device ID (deviceID) and other information the central server may utilize to bind the registration request to an account. For example, the user's mobile device may access a registration website, receive inputs from the user, and transmit the user input as data to the registration website for use by the central server as described above with reference to FIG. 9.

In some embodiments, the user information may include personal information about the user, such as name, address, contact information (e.g., social network sites, cell phone number, email address, telephone number, etc.) age, and other demographic information, as well as identifying information about wireless identity transmitters and/or proximity broadcast receivers that may be associated with the user's account. For example, the user information transmitted to the central server may include the serial number on a wireless identity transmitter and/or a confirmation code produced by the mobile device in response to installing the application with the operations in block 1002. The user information may also include preference information, such as the user's preferred retails stores, product lines, and areas to eat or consume.

The user information may further include privacy permissions that indicate how personal information may be distributed or used by the central server. In some embodiments, users may register as anonymous users, such that the central server does not store any identifying information about the users. For example, an account may be registered that is linked to a non-descript post office box, a disposable cellular telephone number, or other contact information that does not directly identify the user or the holder of the account. This may be important for those who may choose to utilize services provided by the central server, but who are concerned about leaked private or identifying information.

In block 1012, the user's mobile device may store account information, such as authentication information (e.g., codes, messages) from the central server or device ID associated with an owned wireless identity transmitter.

In block 1006, the central server may receive the user information for account registration. In block 1008, the central server may register an account for the user. For example, the central server may store the user's information, including provided device identifications, in a database of all registered users. In block 1010 the central server may provide account creation information to the user. The account creation information may include an authentication code or other information the user's mobile device may store for future use. For example, the central server may display confirmation of account creation on a website accessible by the user's mobile device or alternatively may transmit a confirmation signal, text message, email, or other communication to the user's mobile device.

In block 201, the wireless identity transmitter may boot-up, such as in response to the user inserting a battery. When the wireless identity transmitter boots, a nonce or counter value may be initialized. For example, the wireless identity transmitter may begin to increment a value that represents the passage of time, starting from a zero value.

In block 1013, the wireless identity transmitter may broadcast a message (i.e., a broadcast message) that includes an encoded (or rolling) identifier. For example, the wireless identity transmitter may begin transmitting broadcast messages every few seconds. The wireless identity transmitter may generate rolling identifiers with the embodiment methods described in the related applications incorporated herein. In general, the broadcast message may include a payload that includes data generated by performing a pseudo-random function. For example, the wireless identity transmitter may perform a pseudo-random function to generate encoded data based on input values of the wireless identity transmitter's device ID, a nonce or counter value, and a secret key, seed, or other value known only to the wireless identity transmitter and the central server. In some embodiments, the pseudo-random function may be a polynomial time computable function that may utilize a randomly selected seed value only known to the wireless identity transmitter and the central server, such that the pseudorandom function may be computationally indistinguishable from a random function defined on the same domain with output to the same range as the pseudorandom function. In some embodiments, the keyed-hash Message Authentication Code (HMAC) or the cipher-based Message authentication Code (CMAC) may be used as the pseudo-random function.

In some embodiments, the wireless identity transmitter may be required to be activated within a predefined number of seconds within the time the mobile device begins the registration process with the operations in block 1004. In other words, once the wireless identity transmitter begins incrementing its nonce or counter value, the user must register with the central server within a certain period. This enables the central server to try at only a certain number of values when trying to determine the nonce or counter value at the wireless identity transmitter during registration.

In some embodiments, the wireless identity transmitter may indicate an initial broadcast by adjusting data within a broadcast message's payload. For example, the wireless identity transmitter may change a bit within a broadcast message that the central server may recognize as indicating an initialization time period for the wireless identity transmitter. If there are initialization indicators within payloads, the central server may expedite comparisons between received payloads and stored payloads by avoiding comparisons to payloads corresponding to already registered (or recognized) wireless identity transmitters within a central server lookup data table.

In block 1014, the user's mobile device may receive the broadcast message. In other words, based on the installed application (or app), the mobile device may function as a mobile proximity broadcast receiver. An installed application may, such as the app installed with the operations in block 1002, may be waiting to receive such a broadcast message in response to initiating registration operations with the central server via the registration request. In block 1016, the mobile device may transmit the wireless identity transmitter's rolling identifier and other information, such as the stored device ID and authentication information. In some embodiments, the mobile device may extract encoded information from the received broadcast message, such as by using text comparison and/or parsing operations. For example, the mobile device may perform a most-significant bit operation.

In block 1018, the central server may receive the message with the encoded information, as well as the authentication information and the device ID. In block 1020, the central server may validate authentication information, such as in the received message from the mobile device. In particular, the central server may compare the authentication information to information generated in the operations in blocks 1008-1010.

In block 1022, the central server may generate a set of rolling identifiers using the device ID and possible nonce or counter values. The central server may compare the encoded identifiers of the set with the rolling identifier received from the mobile device. In some embodiments, the central server may compute a set of encoded data by using a pseudo-random function, such as described above, along with the device ID and a number of nonce or counter values. For example, the central server may execute the pseudo-random function with a seed shared with wireless identity transmitters, the device ID indicated by the mobile device, and many nonce or counter values, starting with 0.

In block 1024, when the central server matches the received rolling identifier to one of the rolling identifiers in the generated set, the central server may store relevant nonce or counter value and time in relation to the WIT. The central server may use the nonce or counter value used to generate the matching rolling identifier to sync with the nonce or counter running on the wireless identity transmitter. In some embodiments, the central server may store an indicator that describes the wireless identity transmitter as having been successfully registered and/or synced.

In optional block 1026, the central server may then transmit a registration result message to the user, such as by transmitting a message to the mobile device. The registration result message may indicate whether or not the central server was able to match the received encoded identifier with a generated identifier.

In optional block 1028, the mobile device may receive the registration result message. In some embodiments, the registration result message indicates that the registration process failed (e.g., the received broadcast message received by the mobile device did not correspond to the user's wireless identity transmitter), the mobile device may re-attempt the registration by receiving and relaying another broadcast message.

The operations described above, particularly within blocks 1013-1024, assume that message processing operations performed by the various devices, as well as any propagation delay, may be much smaller than the time required to increment (or update) the nonce or counter value at the wireless identity transmitter. This ensures that the nonce or counter values at the wireless identity transmitter and central server do not differ by more than 1.

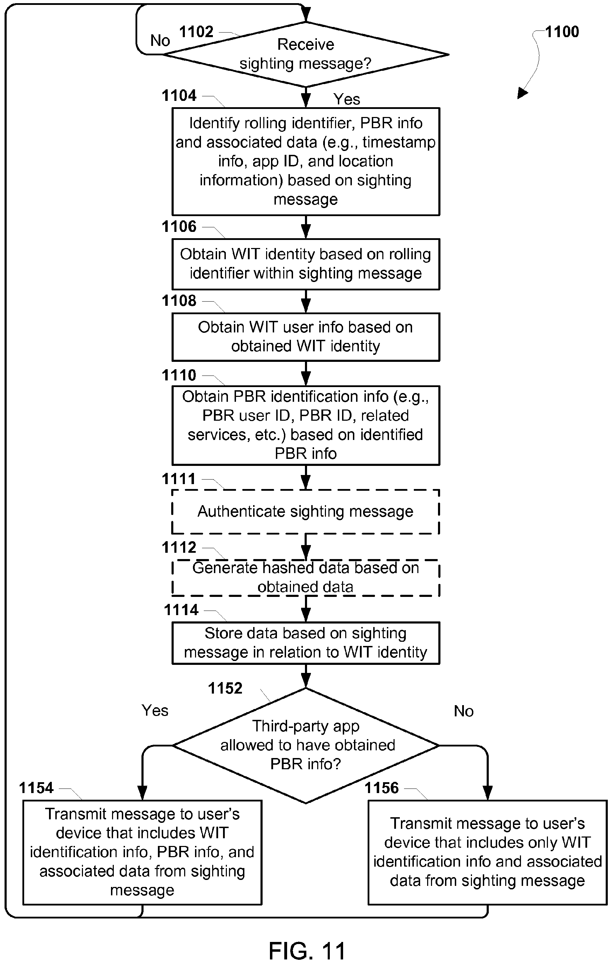

FIG. 11 illustrates an embodiment method 1100 for a central server to process sighting messages received from proximity broadcast receivers. As described above, the central server may be configured to utilize various modules, components, circuitry, and software to process sighting messages. In determination block 1102, the central server may determine whether a sighting message is received. The central server may evaluate a receiving circuit, buffer, queue or other indicator to determine when messages are received from various devices, such as proximity broadcast receivers. In some embodiments, the central server may utilize a network module as described above to determine whether a sighting message is received. In general, sighting messages may be received via long-range communications, such as packets transmitted via a cellular network over the Internet. If the central server does not receive a sighting message (i.e., determination block 1102 = "No"), the central server may continue with the operations in determination block 1102.

If the central server receives a sighting message (i.e., determination block 1102 = "Yes"), in block 1104 the central server may identify wireless identity transmitter information, proximity broadcast receiver information, and associated data based on the sighting message. The central server may evaluate, parse, and otherwise make accessible various data and information segments within the received sighting message. For example, the central server may parse the sighting message to identify an included broadcast message from the wireless identity transmitter. As another example, the central server may identity encoded data corresponding to a wireless identity transmitter identity (i.e., rolling identifier), proximity broadcast receiver identification information (e.g., a receiver ID), location information, timestamp information, sensor data (e.g., accelerometer sensor data, etc.), identifiers of applications (or apps) associated with a proximity broadcast receiver (e.g., a list of installed applications, an identifier for a relevant app executing on the proximity broadcast receiver, etc.). In some embodiments, the central server may perform the operations of block 1104 with a sightings resolver module as described above.

In block 1106, the central server may obtain the wireless identity transmitter identity based on the rolling identifier within the sighting message. The central server may perform operations to decode, descramble, decrypt, or otherwise make accessible the rolling identifier. For example, the central server may perform operations to apply a secret key or decoding algorithm to obtain the identity of the wireless identity transmitter. In some embodiments, the operations of block 1106 may be performed by the central server by way of a rolling ID resolver component as described above. For example, the central server may cause a sightings resolver module to exchange data with the rolling ID resolver component to obtain a decoded wireless identity transmitter identifier.

In block 1108, the central server may retrieve the wireless identity transmitter user information based on the obtained wireless identity transmitter identity. For example, the central server may retrieve user account information related to the wireless identity transmitter, such as demographics information, stored data indicating previous behaviors (e.g., travel paths, location history, etc.). In some embodiments, the operations of block 1108 may be performed by the central server by way of an authorization system module as described above. For example, the central server may cause the authorization system module to exchange wireless identity transmitter identity information with a user portal component to obtain user information as saved within user registration databases.

In block 1110, the central server may retrieve proximity broadcast receiver identification information, such as proximity broadcast receiver user information and related services, based on the identified proximity broadcast receiver information. For example, the central server may retrieve the merchant identity associated with the proximity broadcast receiver that transmitted the received sighting message, the tracking services the proximity broadcast receiver is registered to participate in, as well as any other relevant information to the proximity broadcast receiver. The central server may retrieve email addresses, MAC addresses, phone numbers, and other contact information related to a user of related proximity broadcast receiver based on the information within the sighting message. For example, the central server may determine the user contact information associated with a proximity broadcast receiver that may be used for subsequent transmissions from the central server, such as emails or SMS text messages that indicate proximity to an item of interest. In some embodiments, the central server may determine the identity of a user of a smartphone that is configured to perform operations of a mobile proximity broadcast receiver.

In some embodiments, the operations of block 1110 may be performed by the central server by way of an authorization system module as described above. For example, the central server may cause the authorization system module to exchange proximity broadcast receiver information with a developer (or user) portal component to obtain information about related registered services (e.g., merchants, stores, vendors, services, etc.) as saved within developer registration databases.

In optional block 1111, the central server may authenticate the sighting message. Based on authentication information within the received sighting message, the central server may perform authentication operations that confirm the legitimacy of the sighting message as coming from a known or otherwise valid proximity broadcast receiver. As described above, sighting messages may include data, such as secret codes, certificates, or hash data, that can be used to confirm the identities of valid proximity broadcast receivers.

As third-parties may attempt to spoof proximity broadcast receivers associated with registered services (e.g., a nefarious spammer may attempt to imitate a merchant's store proximity broadcast receiver by sending a fraudulent sighting message), the central server may check for authentication information that confirms the information within the sighting message is useful and related to a registered service (e.g., a registered merchant, a valid developer, or other party that deploys legitimate proximity broadcast receivers). For example, the central server may detect obscured header information within the sighting message that relates to a merchant established within the central server as a registered developer.

When the sighting message does not include authentication information expected by the central server, such as a special code that all proximity broadcast receivers within a certain building possess, or does include authentication information that does not match information stored in the central server, the central server may disregard the sighting message and all included information. For example, a sighting message with out-of-date or incomplete authentication information may be disregarded by the central server, or alternatively stored in a list for potentially fraudulent proximity broadcast receivers.

In optional block 1112, the central server may generate hashed data based on the obtained and/or retrieve data. In some embodiments, the operations of optional block 1112 may be performed by the central server by way of a data anonimizer module as described above. In block 1114, the central server may store data based on the sighting message in relation to the wireless identity transmitter identity. For example, the central server may store identified associated data from the sighting message in a database in relation to the wireless identity transmitter's decoded identity. In some embodiments, the operations of block 1114 may be performed by the central server by way of a data layer module as described above.

As described above, various messages, such as return messages, alerts (or search activation messages), may be transmitted by the central server to various recipients, such as mobile devices associated with a user. For example, the central server may transmit messages to a user's tablet, smartphone, wireless receiver device, or other computing device. A recipient may also include an application or app executing on a mobile device. In some embodiments, the central server may also transmit messages to other third-party recipients or devices, such registered services that may include EMT, fire, local police, retail store, merchant computing devices, and ad servers.

Messages transmitted by the central server in response to receiving sighting messages may be transmitted to inform devices, such as a mobile phone or mobile proximity broadcast receiver carried by a user, of the location of proximity of known wireless identity transmitters. For example, when a proximity broadcast receiver, such as a stationary proximity broadcast receiver within a retail store, relays a broadcast message from a wireless identity transmitter associated with a user, the central server may respond by transmitting a message back to a mobile device of the user indicating the user is near the store's receiver device. Further, a third-party application running on the user's device may use information within the message. For example, a retail store app running on a user's smartphone may receive a notice that the user has moved within proximity of a display area within proximity of a retail store building. In various other embodiments, the third-party applications may be utilized to track owned items associated with wireless identity transmitters. For example, a particular third-party application may perform a ring tone when the user is within proximity of a searched for missing child.

Returning to FIG. 11, in determination block 1152, the central server may determine whether a third-party application (or app) is allowed to have obtained proximity broadcast receiver information. In other words, based on data stored in the central server that is associated with the user of the wireless identity transmitter, the central server may detect any registered services or third-party applications that are associated with the user's devices. For example, the central server may evaluate database information to identify the user has installed a third-party application on his/her smartphone that corresponds to a retail store. The proximity broadcast receiver information may include proximity broadcast receiver identification (e.g., an ID code or identifier) and the user identity of the proximity broadcast receiver. In some embodiments, the central server may identify whether third-party applications are allowed such information based on the third-party's developer rights, such as indicated when the third-party registered as a developer or registered service, or alternatively based on the user's permission settings stored within the user's profile within the central server. In some embodiments, the central server may use application identification information provided within the received sighting message to determine whether the third-party applications on the user's device may receive proximity broadcast receiver information. For example, the sighting message may contain indicators of applications (e.g., app IDs) that correspond to the sighting message and thus are allowed to receive any proximity broadcast receiver information from the central server.

If the third-party app is not allowed to have the obtained proximity broadcast receiver information (i.e., determination block 1152 = "No"), in block 1156 the central server may transmit a message to the user's device that includes only wireless identity transmitter identification information and associated data from the sighting message. For example, the message transmitted by the central server may include the obtained wireless identity transmitter identity, user information, timestamp data, and location information from the sighting message.

If the third-party app is allowed to have the obtained proximity broadcast receiver information (i.e., determination block 1152 = "Yes"), in block 1154 the central server may transmit a message to the user's device that includes wireless identity transmitter identification information, proximity broadcast receiver information, and associated data from the sighting message. For example, the message transmitted by the central server to the user's smartphone may include indicators of the obtained proximity broadcast receiver identification (e.g., serial code, group affiliation, merchant category, etc.). The central server may then continue with the operations in determination block 1102. In some embodiments, the central server may utilize an alert engine module, such as described above with reference to FIG. 9, to transmit and/or generate messages for transmission to various devices.

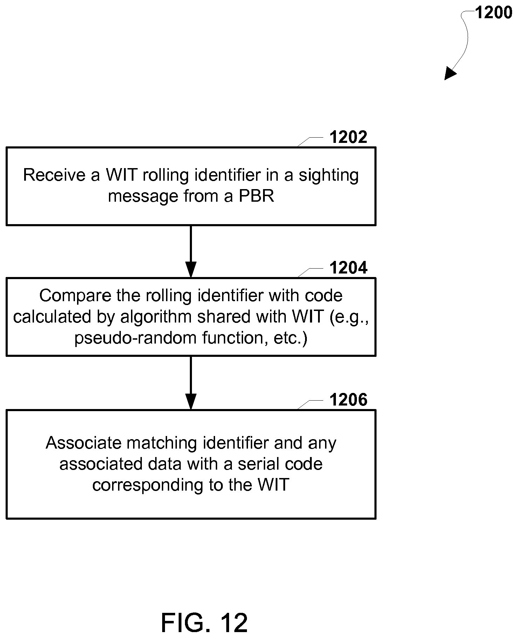

FIG. 12 illustrates an embodiment method 1200 that may be implemented within a central server. The method 1200 may be performed by the central server in response to receiving a sighting message from a proximity broadcast receiver that includes encoded, rolling, or otherwise protected data originally broadcast by a wireless identity transmitter. Privacy of users of wireless identity transmitters may be protected by using a rolling or randomly varying identifier for each wireless identity transmitter so the identifier changes with time. New identifiers may be generated periodically or based on certain events, such when a wireless identity transmitter broadcasts an identifier a certain number of times or for a certain time period (e.g., an hour), or after one or more pairings. This rolling of identifiers may be coordinated with the central server so that the wireless identity transmitter may still be tracked. For example, the wireless identity transmitter and the central server may each have a cryptographically secure pseudo-random number generator algorithm that is used to generate identifiers on a common time scale so that any given moment, the central server can calculate the identifier being transmitted by a particular wireless identity transmitter.

Generating rolling identifiers, or other methods of obfuscating identifiers, is important in that it may prevent sniffing attacks from a third party. For example, if the identifier was static, a third party could sniff the identifier, such as by impersonating a proximity broadcast receiver, and then use the identifier to track the wireless identity transmitter. A rolling identifier may hinder such an attack impossible if the third party lacks the pseudo-random number generator or other means of generating the latest rolling identifiers.

In block 1202, the central server may receive a wireless identity transmitter's rolling identifier in a sighting message from a proximity broadcast receiver. In block 1204, the central server may compare the rolling identifier with code calculated by an algorithm shared with the wireless identity transmitter, such as a pseudo-random function or an encryption algorithm with shared secret keys. The algorithm may be software instructions, routines, algorithms, circuitry, or modules that are utilized by the central server to calculate codes that are expected to align with rolling identifiers generated and broadcast by the wireless identity transmitter over a period. In various embodiments, the central server may compare the received identifier with the next several codes in case some identifiers were missed. If the received identifier matches any codes generated or expected by the central server, in block 1206 the central server may associate the matching identifier and any associated data with a serial code corresponding to the wireless identity transmitter. This way, if the central server later receives a user request with the wireless identity transmitter's serial code, such as a request from a parent to locate the wireless identity transmitter carried by a child, then the central server can find all the prior matches and any associated data without having to search for every previous rolling identifier.

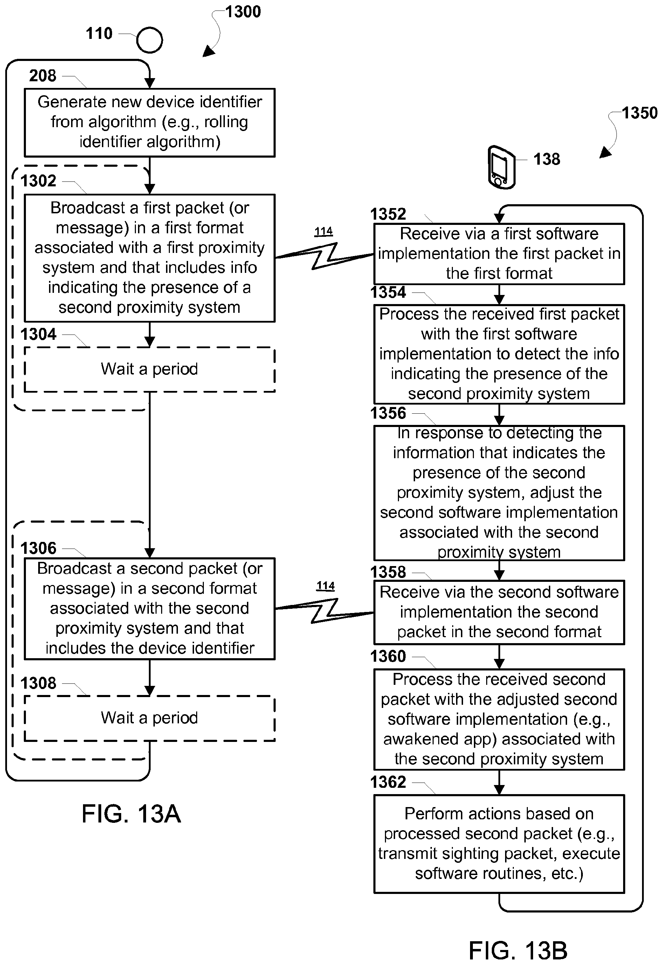

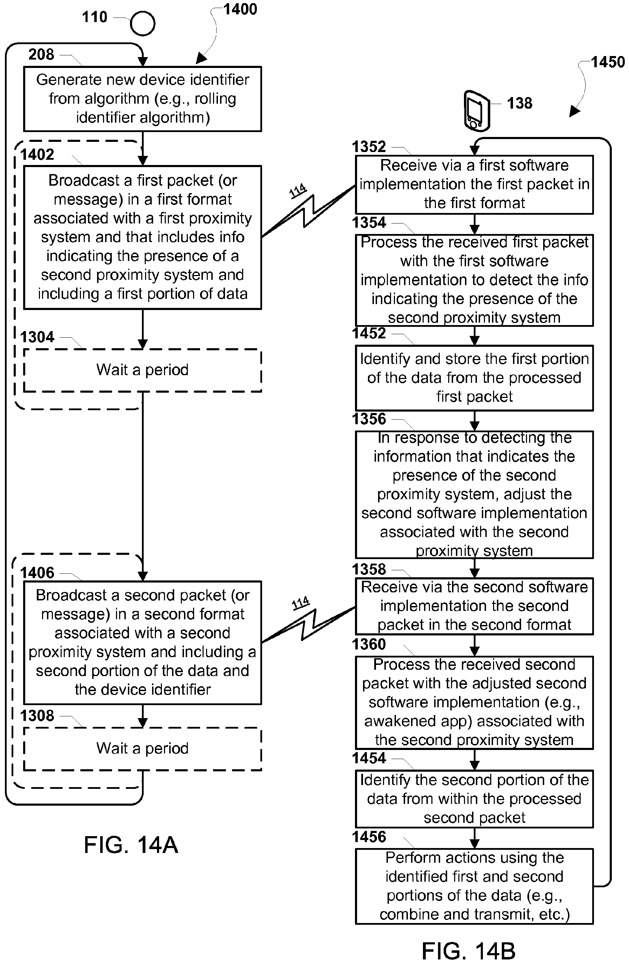

FIGS. 13A-B and FIGS. 14A-B illustrate embodiment methods for a wireless identity transmitter to broadcast messages (i.e., beacon messages or packets) of different packet formats for receipt and processing by proximity broadcast receivers. As described above, the different packet formats may each be associated with or otherwise well-suited for different software implementations, such as firmware or applications, executing on receiver devices. Further, the different packet formats (and software implementations) may be associated with different communication frameworks, referred to as "proximity systems." Different proximity systems may utilize the same type of general communication protocols or signals, such as Bluetooth LE packets, but utilize packets of different packet formats and/or other packet data (e.g., header information) to indicate associations or applicability to the different proximity systems. In other words, transmitters (or beacon devices) of different proximity systems may transmit packets of the same communication protocol but different packet formats. In particular, one proximity system may be associated with the proprietary architecture that utilizes Bluetooth LE packets, wireless identity transmitters, proximity broadcast receivers, and central servers as generally described herein.

FIGs. 13A and 13B illustrates embodiment methods 1300, 1350 for a wireless identity transmitter 110 broadcasting a first packet (or broadcast message) of a first packet format and second packet of a second packet format for processing by a proximity broadcast receiver 138. In general, registration calls may be executed by the proximity broadcast receiver 138 based on receiving broadcast messages and may be used by various software implementations on the proximity broadcast receiver 138, such as firmware, routines, and applications. However, the efficiency and other behaviors of the proximity broadcast receiver 138 may differ based on the various software implementations that are used to process received packets. Thus, broadcast receiver devices may
configure software implementations associated with broadcast messages that include rolling identifiers to sleep or perform infrequently in order to limit power consumption. Broadcast receiver devices may further be configured to operate or execute such software implementations when associated packets are determined to be available. For example, in response to receiving a packet in a first packet format that indicates broadcast messages with rolling identifiers are nearby, a proximity broadcast receiver 138 may wake up or increase the duty cycle of firmware that is well-suited (or optimized) for handling messages in the second packet format, thus using battery power more efficiently and/or experiencing less packet processing latency.

In various embodiments, the proximity broadcast receiver 138 may be a smartphone including a Bluetooth (or Bluetooth LE) transceiver and configured to receive and process various Bluetooth advertising packets. For example, the proximity broadcast receiver 138 may execute software implementations (e.g., software, routines, operations, or apps) for handling Bluetooth advertising packets of different packet formats or structures.

Referring to FIG. 13A, in block 208 if method 1300 the wireless identity transmitter 110 may generate a new device identifier from an algorithm, such as a pseudorandom algorithm for generating rolling identifiers. In block 1302, the wireless identity transmitter 110 may broadcast a first packet that is formatted in a first packet format associated with a first proximity system and that includes info indicating the presence of a second proximity system. Such packets of the first packet format may be well-suited for processing by a first software implementation (e.g., firmware, application, routine, etc.) executing on receiver devices. For example, the broadcast packet may be formatted with a header or other flag or code that indicates the message is structured to be well-suited (or optimized) for use with an operating system of a smartphone receiver (e.g., the proximity broadcast receiver 138). As described above, the various packet formats, such as different structures of non-connectable Bluetooth packets, may be indicated by communication protocol specifications, such as the Bluetooth specification.

The first packet may also include a command, instruction, or code that, when executed or identified by receiving devices, may cause a second software implementation (e.g., firmware, software, routines, etc.) to be initiated, prepared, prioritized (e.g., increased duty cycle), or otherwise be awakened. For example, the first packet may include a command for any proximate recipient device to initiate (or wake) firmware associated with messages of the second packet format. As another example, the first packet may include a token that may cause an application to come to the foreground of the proximity broadcast receiver 138 and start listening for messages having a different packet format. In other words, the first packet may be designed to include information that informs the proximity broadcast receiver 138 (e.g., smartphone) that it is near a wireless identity transmitter 110 that is broadcasting special data (e.g., sensor data, obscured, rolling identifiers, etc.), and therefore the proximity broadcast receiver 138 should register to receive these broadcasts to decrease latency. In various embodiments, the first packet may or may not include a rolling identifier as generated with the operations in block 208. In some embodiments, the first packet may not include a service UUID, or alternatively may include a service UUID that has a length of zero, when formatted in the first packet format.

After broadcasting the first packet of the first packet format, the wireless identity transmitter 110 may wait for a period in optional block 1304, such as by performing a busy-wait cycle for a predefined number of milliseconds (e.g., 40 ms, 50 ms, 60ms, 100 ms, etc.). The predefined number of milliseconds may correspond to a predetermined amount of time (or a threshold) during which a proximity broadcast receiver 138 may need to receive and process the first packet. In an optional embodiment, the wireless identity transmitter 110 may continue to broadcast the first packet with the operations in block 1302 for a predefined number of repetitions. For example, the wireless identity transmitter 110 may re-broadcast the first packet every few milliseconds for a predefined number of iterations to ensure nearby proximity broadcast receivers 138 may receive and process the first packet. The optional wait period and/or number of repetitions of broadcasting the first packet may be based on known processing cycle times or functionalities of a range of receiver devices, or alternatively may be based on particular functionality/processing requirements for proximity broadcast receivers 138.

Referring to FIG. 13B, the proximity broadcast receiver 138 may receive via the first software implementation the first packet of the first packet format in block 1352 of method 1350. As described above, the proximity broadcast receiver 138 may be configured to monitor for Bluetooth advertising packets of known structures that are broadcast via short-range wireless signals 114 and associated with the first software implementation, such as packet formats defined in the Bluetooth specification and/or as described above with reference to FIGS. 3A-4B. As described above, the first software implementation may be firmware, applications, routines, etc. that are designed or otherwise well-suited (or optimized) for use by the proximity broadcast receiver 138 for efficiently processing packets of the first packet format. In some embodiments, the received first packet may include a header bit, code, or other information indicating the first packet format, and the proximity broadcast receiver 138 may be configured to execute operations, routines, methods, software, etc. of the first software implementation in response to detecting the information indicating the first packet format.

Receiving (and processing) packets of the first packet format via the first software implementation may consume less receiver power than monitoring for and/or receiving packets of other formats via other software implementations supported by the proximity broadcast receiver, as described below. For example, the first software implementation associated with the first packet format may be an operating system routine that parses the received first packet with a minimal amount of latency and/or battery power consumption. The proximity broadcast receiver 138 may be configured to normally (or by default) execute the first software implementation.

In block 1354, the proximity broadcast receiver 138 may process the received first packet with the first software implementation to detect information indicating the presence of the second proximity system. The proximity broadcast receiver 138 may process the received first packet to identify commands, indicators, flags, codes, or instructions indicating that messages associated with the second proximity system are available and/or that a second software implementation associated with the second proximity system should be performed by the proximity broadcast receiver 138. For example, the received first packet may include a command for the proximity broadcast receiver 138 to load, launch, wake-up, or register certain routines.

Accordingly, in block 1356, in response to detecting the information that indicates the presence of the second proximity system (i.e., messages of the second format), the proximity broadcast receiver 138 may adjust the second software implementation (or change the behavior of the second software implementation) associated with the second proximity system, such as by waking an app or firmware associated with the second packet format based on the processed first packet. In other words, the receiver 138 may be adjusted to better handle packets of the second packet format. Such an adjustment or change may include waking the second software implementation or merely changing an operating parameter of the second software implementation. For example, the proximity broadcast receiver 138 may change the duty cycle for an application to increase the frequency at which the application monitors for the receipt of packets of the second packet format at the receiver. The second software implementation may or may not be awakened or launched from a dormant or cold state based on the detected presence of the second proximity system.

In some embodiments, in response to detecting data within the first packet indicating that a subsequent second packet of the second packet format may be transmitted by the wireless identity transmitter 110, the proximity broadcast receiver 138 may register with one or more operating system APIs to receive subsequent messages in the second packet format. For example, the proximity broadcast receiver 138 may register to receive packets based on a service UUID indicated in the received first packet, register to receive all subsequent packets, or register either for receiving subsequent packets with the service UUID or a proprietary value associated with/ coded into the wireless identity transmitter 110, etc. In some embodiments, the proximity broadcast receiver 138 may load or otherwise launch a dormant application for the second packet format in response to processing the received first packet.

Returning to FIG. 13A, in block 1306 of method 1300, the wireless identity transmitter 110 may broadcast a second packet (or message) that is formatted in a second format associated with the second proximity system and that includes the device identifier. For example, the second packet may be a connectionless Bluetooth packet formatted in one of the packet structures as described above with reference to FIGS. 3A-4B. The wireless identity transmitter 110 may broadcast via the short-range wireless signals the second packet in the second packet format upon the expiration of a predefined period after broadcasting the first packet (e.g., 50 ms, 51, ms, 60, etc. elapses after the transmission of the first packet). The second packet may include the identifier generated in the operations in block 208, such as a rolling identifier that is encrypted or otherwise obscured. The second packet may further include other data, such as sensor data (e.g., thermistor sensor data, accelerometer sensor data, radiation sensor data, humidity sensor data, CO2 sensor data, etc.). In some embodiments, the second packet may include a service UUID or a service UUID with a length greater than zero. The wireless identity transmitter 110 may then wait a period in optional block 1308, such as a predefined number of milliseconds, and may continue with the operations in block 208 to generate a new device identifier. In an optional embodiment, the wireless identity transmitter 110 may continue with the operations in block 1306 to repeat the broadcast of the second packet, such as by repeating the broadcast for a predefined number of times or iterations.

Returning to FIG. 13B, in block 1358 of method 1350 the proximity broadcast receiver 138 may receive the second packet with the adjusted second software implementation, and may process the received second packet with the second software implementation associated with the second packet format (and the second proximity system) in block 1360. In other words, the proximity broadcast receiver 138 may receive the second packet in response to the adjustments made with the operations in block 1356. For example, an awakened firmware may interpret header data within the received second packet to identify a rolling identifier and/or data within the received second packet. In block 1362, the proximity broadcast receiver 138 may perform actions based on the processed second packet, such as transmitting a sighting message to a central server that indicates the wireless identity transmitter 110 (i.e., the rolling identifier) is within proximity of the proximity broadcast receiver 138. The proximity broadcast receiver 138 may also perform various operations (e.g., software instructions, routines, etc.) in response to processing the received second packet, such as by logging the receipt of the second packet, launching an application, and emitting information to a user (e.g., render a text message indicating a wireless identity transmitter 110 is nearby, playing a sound sample, etc.). The proximity broadcast receiver 138 may repeat the operations by returning to block 1352 to receive further messages.

In some embodiments, the proximity broadcast receiver 138 may be configured to ignore subsequent broadcast messages from the wireless identity transmitter 110 once the first packet and second packet have been received. For example, the proximity broadcast receiver 138 may compare data received within the first and/or the second packets from the wireless identity transmitter 110 (e.g., the rolling identifier) to data within subsequent packets to determine whether the subsequent packets may be ignored or processed as new communications. Such a technique may be valuable for avoiding redundant processing of packets from wireless identity transmitter 110s that may repeatedly (and continually) broadcast the same data while within proximity of the proximity broadcast receiver 138. In some embodiments, the proximity broadcast receiver 138 may only ignore subsequent messages for a predefined period of time, such as a number of seconds, minutes, etc.

FIGs. 14A-14B illustrates embodiment methods 1400, 1450 for a wireless identity transmitter 110 broadcasting a first packet of a first packet format including a first data portion and second packet of a second packet format including a second data portion for processing by a proximity broadcast receiver 138. The methods 1400, 1450 are similar to the methods 1300, 1350 described above, respectively, except that the methods 1400, 1450 may include operations for broadcasting and processing data spread across both the first and the second packets. In other words, the first packet of a first packet format may be configured to not only cause a proximity broadcast receiver 138 to adjust or change a software implementation associated with the second type of packet (e.g., wake or change the duty cycle associated with an application, firmware, operation, routine, etc.), but also may include a portion of data that may be used by that software implementation associated with the second type of packet. For example, the wireless identity transmitter 110 may perform operations to divide an original payload, such as a unique identifier (e.g., a rolling code), into two data segments and may then broadcast the first data segment in a first Bluetooth packet of a first packet format and the second data segment in a second Bluetooth packet of a second packet format. The proximity broadcast receiver 138 may be configured to combine or otherwise process the data segments from the first and the second packets together to generate information (e.g., a complete rolling identifier) and/or commands. In various embodiments, sequential information, such as a series of ordered commands, software instructions, passcodes, keys, or application data, may be transmitted separately in the first and second packets so that the sequential information may not be known, used, or executed unless the data from the first packet and second packet is received and processed. For example, the wireless identity transmitter 110 may transmit a second instruction of a command in the data of the first packet and may transmit the first and third instructions of the command in the data of the second packet so that the proximity broadcast receiver 138 may execute the command only when combining the data of both the first and the second packets.

Referring to method 1400 of FIG. 14A, in block 208 the wireless identity transmitter 110 may generate a new device identifier from an algorithm. In block 1402, the wireless identity transmitter 110 may broadcast a first packet (or message) that is formatted in a first packet format associated with a first proximity system and that includes information indicating the presence of a second proximity system and includes a first portion of data. For example, the first portion of data may be the beginning of an instruction set, a segment of application data, a subset of a secret message or secret information, etc. After broadcasting the first packet of the first packet format with the first portion of data, the wireless identity transmitter 110 may wait for a period in optional block 1304, such as by performing a busy-wait cycle for a predefined number of milliseconds (e.g., 40 ms, 50 ms, 60ms, 100 ms, etc.). The predefined number of milliseconds may correspond to a predetermined amount of time (or a threshold) during which a proximity broadcast receiver 138 may require to receive and process the first packet. In an optional embodiment, the wireless identity transmitter 110 may continue to broadcast the first packet with the operations in block 1402 for a predefined number of times/iterations/repetitions. For example, the wireless identity transmitter 110 may re-broadcast the first packet every few milliseconds for a certain number of iterations to ensure nearby proximity broadcast receivers 138 may receive and process the first packet. The optional wait period and/or number of repetitions of broadcasting the first packet may be based on known processing cycle times or functionalities of a range of receiver devices, or alternatively may be based on particular functionality/processing requirements for proximity broadcast receivers 138.

Referring to method 1450 of FIG. 14B, the operations of blocks 1352, 1354-1360 may be similar to as described above. In particular, the proximity broadcast receiver 138 may receive via a first software implementation the first packet of the first packet format in block 1352. As described above, the proximity broadcast receiver 138 may be configured to monitor for Bluetooth advertising packets of known structures that are broadcast via short-range wireless signals 114, such as packet formats defined in the Bluetooth specification and/or as described above with reference to FIGS. 3A-4B. In block 1354, the proximity broadcast receiver 138 may process the received first packet with the first software implementation to detect information indicating the presence of the second proximity system. In block 1452, the proximity broadcast receiver 138 may identify and store the first portion of the data from the processed first packet. In particular, the proximity broadcast receiver 138 may identify codes, bits, messages, or other information within the payload of the received first packet that indicate the first portion exists and may be combined with subsequently received data from the wireless identity transmitter 110. For example, the proximity broadcast receiver 138 may parse the data within the received first packet to detect a flag bit that indicates the payload includes data to be used with other packets yet to be received by the proximity broadcast receiver 138. The proximity broadcast receiver 138 may store the first portion of the data within a temporary storage buffer or other location associated with the second packet format and/or application. For example, the first portion of data may be stored within a register or memory that the proximity broadcast receiver 138 associates with partial data from broadcast messages from wireless identity transmitter 110s. In some embodiments, the proximity broadcast receiver 138 may store the first portion of data with reference to the received first packet and/or an identifier corresponding to the first packet and/or the wireless identity transmitter 110 to enable correct subsequent combination operations upon receipt of the remainder of the data (i.e., the second portion of the data). For example, the proximity broadcast receiver 138 may store the first portion of the data in a data record of a database that is linked to a unique identifier or timestamp also indicated within the first packet.

The proximity broadcast receiver 138 may process the received first packet to identify commands, codes, or instructions indicating actions that should be performed by the proximity broadcast receiver 138, such as a command to load, launch, wake-up, or register for certain routines or software. Accordingly, in block 1356, in response to detecting the information that indicates the presence of the second proximity system, the proximity broadcast receiver 138 may adjust the second software implementation (or change the behavior of the second software implementation) associated with the second proximity system, such as by waking an app or firmware associated with the second packet format based on the processed first packet.

Returning to method 1400, in block 1406, the wireless identity transmitter 110 may broadcast a second packet (or message) that is formatted in a second format associated with a second proximity system and includes a second portion of the data and the device identifier. For example, the second packet may be a connectionless Bluetooth packet formatted in one of the packet structures as described above with reference to FIGS. 3A-4B. The second packet may include the identifier generated in the operations in block 208, such as a rolling identifier that is encrypted or otherwise obscured. The second portion of the data may include various types of information that may be combined within the first data to generate useful information, instructions, commands, or data. For example, the second portion may include information that has no meaning or usefulness unless it is combined with the information within the first portion of data. As another example, the second portion of data may be the latter half of a sensor data report that may be combined with the first portion of data that is the first half of the sensor data report. The wireless identity transmitter 110 may then wait a period in optional block 1308, such as a predefined number of milliseconds, before continuing with the operations in block 208 to generate a new device identifier. In an optional embodiment, the wireless identity transmitter 110 may continue with the operations in block 1406 to repeat the broadcast of the second packet, such as broadcasting the second packet a predefined number of iterations.

In some embodiments, the device identifier may be divided between the first and the second portions of the data. For example, the wireless identity transmitter 110 may transmit the first packet with a first number of bits representing an obscured or rolling identifier and may transmit the second packet with a second number of bits representing the remainder of the obscured identifier.

Returning to method 1450, in block 1358 the proximity broadcast receiver 138 may receive via the adjusted second software implementation the second packet of the second packet format, and may process the received second packet with the second software implementation associated with the second proximity system (and second packet format) in block 1360. For example, an awakened application may interpret header data within the received second packet to identify a rolling identifier and/or data within the received second packet. In block 1454, the proximity broadcast receiver 138 may identify the second portion of the data from within the processed second packet. For example, based on the processing (e.g., parsing and interpretation of parsed data), the proximity broadcast receiver 138 may detect a bit, flag, or code that indicates that the payload of the second packet includes the second portion that is to be combined with the first portion within the received first packet.

In block 1456, the proximity broadcast receiver 138 may perform actions using the identified first and second portions of the data from the received first and second packets. For example, the proximity broadcast receiver 138 may perform operations to combine or merge the stored first portion of the data with the second portion of the data. As another example, the proximity broadcast receiver 138 may analyze the first and second portions of the data to identify an order of operations represented by the first and second portions, and may perform the operations in order. As another example, the proximity broadcast receiver 138 may package both the first and the second portions of the data in a sighting message to be relayed to a central server. In some embodiments, the first and second portions of the data may be processed or otherwise combined by the proximity broadcast receiver 138 to generate a command (e.g., a software instruction, API call, etc.) that may be executed by the proximity broadcast receiver 138. In another embodiment, the first and second portions of the data may be processed or otherwise combined to generate the rolling identifier associated with the wireless identity transmitter 110. The proximity broadcast receiver 138 may repeat the operations by returning to block 1352 to receive further packets.

FIG. 15 illustrates components of an exemplary wireless identity transmitter 110. The wireless identity transmitter 110 may include a microcontroller 1501, a short-range radio 1504 (e.g., a Bluetooth^{®} radio or transceiver) coupled to an antenna 1506, a memory 1502, and a battery 1510. Although these components are shown linked by a common connection, they may be interconnected and configured in various ways. For example, a wireless identity transmitter 110 may be configured such that the microcontroller 1501 may determine when to transmit a message based on the contents of the memory 1502. In some embodiments, the microcontroller 1501 may be a Bluetooth system-on-chip unit. The memory 1502 may also include one or more messages or message portions to be transmitted by the short-range radio 1504 via the antenna 1506 based on commands from the microcontroller 1501. The battery 1510 may supply power as needed by the other components. Also, in some implementations the microcontroller 1501, the short-range radio 1504 and/or the memory 1502 may be integrated together as a single integrated circuit. Since these components may be microchips of standard or off-the-shelf configuration, they are represented in FIG. 15 as blocks consistent with the structure of an example embodiment.

The wireless identity transmitter 110 may be coupled with or built into various objects, such as a bracelet. For example, an exemplary wireless identity transmitter 110 may be in a form easily attached to a strap, such as a watchband or dog collar. Alternate embodiments may incorporate a wireless identity transmitter 110 into any other mobile objects that may need tracking.

The wireless identity transmitter 110 may conserve power by periodically entering a power saving mode or going to sleep, such as regularly alternating between sleeping and broadcasting of the packet with the wireless identity transmitter 110's identification code. Various embodiments may include different cycles of broadcasting and sleeping, such as some embodiments broadcasting more or less frequently, such as waking and broadcasting every few seconds or minutes between periods of sleep.

In some embodiments, the battery 1510 may be a replaceable coin cell battery. In another embodiment, the wireless identity transmitter 110 may utilize the antenna 1506 to receive update software, instructions, or other data for storage and use in configuration operations, such as configuring transmission intervals and/or transmissions power. The wireless identity transmitter 110 may also store and execute software, algorithms, instructions, code, or other routines for generating rolling codes or identifiers, as described above. In some embodiments, the wireless identity transmitter may not maintain time (e.g., UTC) information, but may instead use a 30 ppm 16 kHz crystal as a clock. Such use of a crystal as a clock may create a timing drift of approximately 40 seconds per year.

Alternatively the memory 1502 may be contained within the microcontroller 1501, which may also include a separate processing unit. The short-range radio 1504 may be a transmitter capable of broadcasting messages or signals including a device ID or, alternatively, a transceiver configured to transmit and receive RF signals, enabling communications with other devices utilizing a communication protocol. For example, the wireless identity transmitter 110 may be configured to communicate with other short-range radio enabled devices, such as smartphones. In some embodiments, the short-range radio 1504 may be configured to communicate via various low-energy, wireless communication protocols, such as LTE-D, peer-to-peer LTE-D, and WiFi-Direct.

In some embodiments, the wireless identity transmitter 110 may include a speaker (not shown) configured to emit a sound capable of being received by a proximity broadcast receiver and/or being heard by a heard by a user. For example, the wireless identity transmitter 110 may emit audible communications that may indicate its presence to listening proximity broadcast receivers. In another embodiment, the wireless identity transmitter 110 may be configured to transmit signals at varying signal strengths, thereby varying the range at which broadcasts from the wireless identity transmitter 110 may be received by proximity broadcast receivers.

Additionally, the wireless identity transmitter 110 may include one or more sensors for measuring various conditions and variables. In some embodiments, the wireless identity transmitter 110 may include an accelerometer 1515 (or any other motion sensor such as a gyroscope or gravitometer), which may collect data indicative of motion of an asset associated with the wireless identity transmitter 110. For example, the accelerometer 1515 may generate motion data describing the movements of a child carrying the wireless identity transmitter 110. Other sensors that may be included within the wireless identity transmitter 110 include a temperature sensor 1516 (such as a thermistor), a radiation sensor 1517, a humidity sensor 1518, and a carbon dioxide (CO₂) sensor 1519. In the various embodiments, the wireless identity transmitter 110 may include any combination of these and other sensors. These potential sensors are only examples of the types of sensors that may be integrated into wireless identity transmitters 110 and other types of sensors may be included. For example, the wireless identity transmitter 110 may also include sensors not shown in the various diagrams, such as a microphone, a camera, a heat sensor, a pressure sensor, and a light sensor.

FIG. 16 illustrates primary components of an exemplary proximity broadcast receiver embodiment. The proximity broadcast receiver 142 may include a short-range radio 1604 (e.g., a Bluetooth radio or transceiver) capable of communicating with a short-range wireless radio (e.g., a Bluetooth radio in the wireless identity transmitter) coupled to an antenna 1606, and a secondary network device 1608 capable of communicating directly or indirectly back to a central server 120 via a network, such as the Internet. In some embodiments, the secondary network device 1608 may be a cellular or wireless radio or a modem or other wired network device. The proximity broadcast receiver 142 may also include a processor 1601, a memory 1602, and a battery 1610 either as the primary power supply or as a backup power supply in the case of proximity broadcast receiver 142 coupled to utility power. The proximity broadcast receiver 142 may include a GPS receiver 1614 or other type of location determining mechanism for determining a current location to associate with any message received from a wireless identity transmitter. If the proximity broadcast receiver is not mobile, it may not include a GPS receiver 1614 in some embodiments since the location may be known and constant. Although these components are shown linked by a common connection, they may interconnected and configured in various ways. Since these components may be microchips of standard or off-the-shelf configuration, they are represented in FIG. 16 as blocks consistent with the structure of an example embodiment.

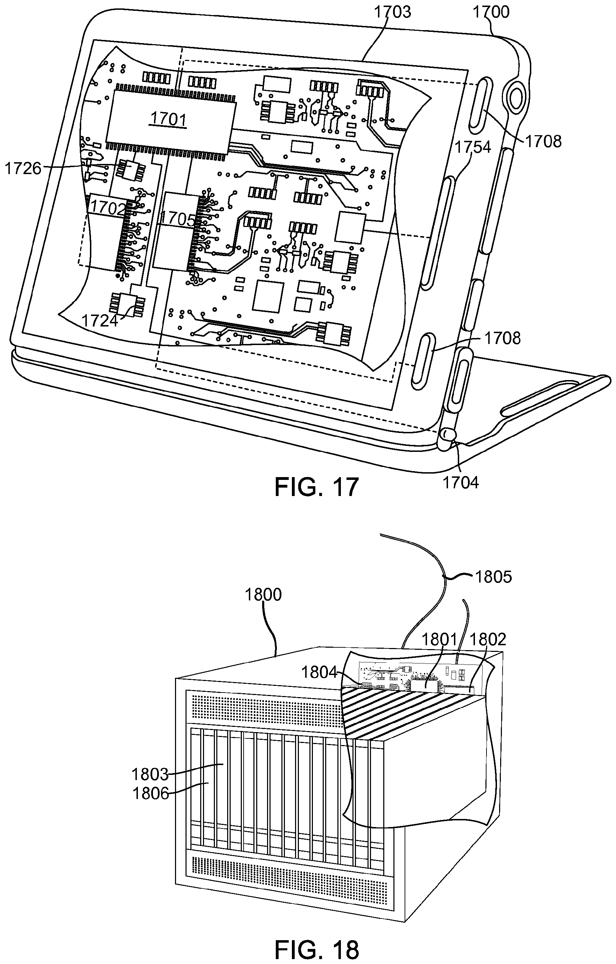

FIG. 17 is a system block diagram of a smartphone type mobile device suitable for use with various embodiments. A smartphone mobile device 1700 may include a processor 1701 coupled to internal memory 1702, a display 1703, and to a speaker 1754. Additionally, the smartphone mobile device 1700 may include an antenna 1704 for sending and receiving electromagnetic radiation that may be connected to a wireless data link and/or cell telephone transceiver 1705 coupled to the processor 1701 and capable of communicating over a wide area wireless communication network. The smartphone mobile device 1700 may include a separate short-range radio transceiver 1724 capable of communicating or pairing with wireless identity transmitters. The smartphone mobile device 1700 typically may also include menu selection buttons or rocker switches 1708 for receiving user inputs. In some embodiments, the smartphone mobile device 1700 may also include a GPS chip 1726 coupled to the processor 1701.

FIG. 18 is a system block diagram of a server 1800 suitable for implementing the various embodiments of this disclosure. The server 1800 may be a commercially available server device. Such a server 1800 typically includes a processor 1801 coupled to volatile memory 1802 and a large capacity nonvolatile memory, such as a disk drive 1803. The server 1800 may also include a floppy disc drive, compact disc (CD) or DVD disc drive 1806 coupled to the processor 1801. The server 1800 may also include network access ports 1804 coupled to the processor 1801 for establishing data connections with a network 1805, such as a local area network coupled to other broadcast system computers and servers.

The processors 1501, 1601, 1701, 1801 may be any programmable microprocessor, microcomputer or multiple processor chip or chips that can be configured by software instructions (applications) to perform a variety of functions, including the functions of the various embodiments described below. In some mobile proximity broadcast receivers, multiple processors 1701 may be provided, such as one processor dedicated to wireless communication functions and one processor dedicated to running other applications. Typically, software applications may be stored in the internal memory 1502, 1602, 1702, 1802 before they are accessed and loaded into the processors 1501, 1601, 1701, 1801. The processors 1501, 1601, 1701, 1801 may include internal memory sufficient to store the application software instructions.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, processor-executable software instructions (or processor-executable instructions), firmware, or any combination thereof. If implemented in software, the functions may be stored on or transmitted over as one or more instructions or code on a computer-readable medium. The steps of a method or algorithm disclosed herein may be embodied in a processor-executable software module, which may reside on a tangible, non-transitory processor-readable or computer-readable storage medium (i.e., a non-transitory processor-readable storage medium having stored processor-executable instructions). Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory machine readable medium and/or computer-readable medium, which may be incorporated into a computer program product.

The preceding description of the disclosed embodiments is provided to enable any person skilled in the art to make or use the present invention.

## Claims

1. A method for processing beacon messages transmitted in a fashion interleaving beacon messages using a first packet format and beacon messages using a second packet format, the method comprising:
receiving (1352), by a receiver via a transceiver, a first beacon message of the first packet format;
detecting (1354) information in the first beacon message indicating a presence of one or more beacon messages of the second packet format;
adjusting (1356) the receiver to process the one or more beacon messages of the second packet format based on the detected information;
receiving (1358), by the receiver via the transceiver in response to adjusting the receiver, a second beacon message of the second packet format; and
performing (1362), by the receiver, an action based on the received second beacon message.

2. The method of claim 1, wherein receiving via the transceiver the second beacon message of the second packet format consumes more power than receiving via the transceiver the first beacon message of the first packet format.

3. The method of claim 1, wherein adjusting (1356) the receiver to process the one or more beacon messages of the second packet format based on the detected information comprises at least one of:
waking, by the receiver, a software implementation associated with the one or more beacon messages of the second packet format based on the detected information; and
changing, by the receiver, a duty cycle for the software implementation associated with the one or more beacon messages of the second packet format to increase a frequency at which the software implementation monitors for receipt of the one or more beacon messages of the second packet format at the receiver.

4. The method of claim 1, wherein performing (1362), by the receiver, the action based on the received second beacon message comprises transmitting, by the receiver, to a server a sighting message including data from the received second beacon message.

5. The method of claim 1, further comprising:
identifying, by the receiver, a first portion of data by processing the received first beacon message; and
identifying, by the receiver, a second portion of the data by processing the received second beacon message,
wherein performing, by the receiver, the action based on the received second beacon message comprises:
combining, by the receiver, the identified first portion of the data and the identified second portion of the data;
generating, by the receiver, a command based on the combination of the identified first portion of the data and the identified second portion of the data; and
executing the command by the receiver.

6. The method of claim 1, wherein the first beacon message and the second beacon message are non-connectable Bluetooth packets.

7. The method of claim 1, wherein:
the first beacon message either includes a first universal unique identifier with a first length of zero or does not include a Bluetooth SIG specified universal unique identifier; and
the second beacon message includes a second universal unique identifier with a second length that is not zero.

8. A computing device, comprising:
a transceiver configured to receive beacon messages; and
a processor coupled to the transceiver and configured with processor-executable instructions to process the beacon messages transmitted in a fashion interleaving beacon messages using a first packet format and beacon messages using a second packet format by performing operations comprising:
receiving (1352), via the transceiver, a first beacon message of the first packet format;
detecting (1354) information in the first beacon message indicating a presence of one or more beacon messages of the second packet format;
adjusting (1356) the computing device to process the one or more beacon messages of the second packet format based on the detected information;
receiving (1358), via the transceiver in response to adjusting the computing device, a second beacon message of the second packet format, wherein the first beacon message and the second beacon message are transmitted in the interleaving fashion; and
performing (1362) an action based on the received second beacon message.

9. The computing device of claim 8, wherein the processor is configured with processor-executable instructions such that receiving via the transceiver the second beacon message of the second packet format consumes more power than receiving via the transceiver the first beacon message of the first packet format.

10. The computing device of claim 8, wherein the processor is configured with processor-executable instructions such that adjusting the computing device to process the one or more beacon messages of the second packet format based on the detected information comprises at least one of:
waking a software implementation associated with the one or more beacon messages of the second packet format based on the detected information; and
changing a duty cycle for the software implementation associated with the one or more beacon messages of the second packet format to increase a frequency at which the software implementation monitors for receipt of the one or more beacon messages of the second packet format at the computing device.

11. The computing device of claim 8, wherein the processor is configured with processor-executable instructions such that performing the action based on the received second beacon message comprises transmitting to a server a sighting message including data from the received second beacon message.

12. The computing device of claim 8, wherein the processor is configured with processor-executable instructions further comprising:
identifying a first portion of data by processing the received first beacon message; and
identifying a second portion of the data by processing the received second beacon message,
wherein performing the action based on the received second beacon message comprises:
combining the identified first portion of the data and the identified second portion of the data;
generating a command based on the combination of the identified first portion of the data and the identified second portion of the data; and
executing the command.

13. The computing device of claim 8, wherein:
the first beacon message either includes a first universal unique identifier with a first length of zero or does not include a Bluetooth SIG specified universal unique identifier; and
the second beacon message includes a second universal unique identifier with a second length that is not zero.

14. A system, comprising:
a computing device that is configured to receive and process beacon messages transmitted in a fashion interleaving beacon messages using a first packet format and beacon messages using a second packet format; and
a first beacon device of a plurality of nearby beacons devices,
wherein the computing device comprises:
a first transceiver; and
a first processor coupled to the first transceiver and configured with processor-executable instructions to perform operations comprising:
receiving (1352), via the first transceiver, a first beacon message of the first packet format;
detecting (1354) information in the first beacon message indicating a presence of one or more beacon messages of the second packet format that are being transmitted by one of the plurality of nearby beacon devices;
adjusting (1356) the computing device to process the one or more beacon messages of the second packet format based on the detected information;
receiving (1358), via the first transceiver in response to adjusting the computing device, a second beacon message of the second packet format, wherein the first beacon message and the second beacon message are transmitted in the interleaving fashion; and
performing (1362), by the computing device, an action based on the received second beacon message,
wherein the first beacon device comprises:
a second transceiver; and
a second processor coupled to the second transceiver and configured with processor-executable instructions to perform operations comprising:
broadcasting (1302), via the second transceiver, the first beacon message in the first packet format.

15. A computer-program comprising instructions for performing a method according to any of the claims 1 to 7.

## Patentansprüche

1. Verfahren zum Verarbeiten von Beacon Nachrichten, die auf eine Weise übertragen werden, in der Beacon Nachrichten unter Verwendung eines ersten Paketformates und Beacon Nachrichten unter Verwendung eines zweiten Paketformates verschachtelt werden, das Verfahren aufweisend:
Empfangen (1352) durch einen Empfänger über einen Transceiver, einer ersten Beacon Nachricht in dem ersten Paketformat;
Detektieren (1354) von Informationen in der ersten Beacon Nachricht, angebend ein Vorliegen von einer oder mehreren Beacon Nachrichten in dem zweiten Paketformat;
Einstellen (1356) des Empfängers, um die eine oder mehreren Beacon Nachrichten in dem zweiten Paketformat basierend auf der detektierten Information zu verarbeiten;
Empfangen (1358), durch den Empfänger über den Transceiver in Antwort auf das Anpassen des Empfängers, einer zweiten Beacon Nachricht in dem zweiten Paketformat; und
Durchführen (1362), durch den Empfänger, einer Aktion basierend auf der empfangenen zweiten Beacon Nachricht.

2. Verfahren nach Anspruch 1, wobei Empfangen über den Transceiver der zweiten Beacon Nachricht in dem zweiten Paketformat mehr Leistung verbraucht als Empfangen über den Transceiver der ersten Beacon Nachricht in dem ersten Paketformat.

3. Verfahren nach Anspruch 1, wobei Einstellen (1356) des Empfängers zur Verarbeitung der einen oder mehreren Beacon Nachrichten in dem zweiten Paketformat basierend auf der detektierten Information wenigstens eines der folgenden aufweist:
Aufwachen, durch den Empfänger, einer Softwareimplementierung, die assoziiert ist mit der einen oder den mehreren Beacon Nachrichten in dem zweiten Paketformat basierend auf der detektierten Information; und
Ändern, durch den Empfänger, eines Arbeitszyklus für die Softwareimplementierung, die assoziiert ist mit der einen oder den mehreren Beacon Nachrichten in dem zweiten Paketformat, um eine Frequenz zu erhöhen, bei der die Softwareimplementierung den Empfang von der einen oder den mehreren Beacon Nachrichten in dem zweiten Paketformat bei dem Empfänger überwacht.

4. Verfahren nach Anspruch 1, wobei Durchführen (1362), durch den Empfänger, der Aktion basierend auf der empfangenen zweiten Beacon Nachricht das Senden, durch den Empfänger, an einen Server einer Sichtungsnachricht beinhaltend Daten von der empfangenen zweiten Beacon Nachricht aufweist.

5. Verfahren nach Anspruch 1, weiterhin aufweisend:
Identifizieren, durch den Empfänger, eines ersten Teils von Daten durch Verarbeiten der empfangenen ersten Beacon Nachricht; und
Identifizieren, durch den Empfänger, eines zweiten Teils von den Daten durch Verarbeiten der empfangenen zweiten Beacon Nachricht,
wobei Durchführen, durch den Empfänger, der Aktion basierend auf der empfangenen zweiten Beacon Nachricht aufweist:
Kombinieren, durch den Empfänger, des identifizierten ersten Teils der Daten und des identifizierten zweiten Teils von den Daten;
Erzeugen, durch den Empfänger, eines Befehls basierend auf der Kombination von dem identifizierten ersten Teil von den Daten und dem identifizierten zweiten Teil von den Daten; und
Ausführen des Befehls durch den Empfänger.

6. Verfahren nach Anspruch 1, wobei die erste Beacon Nachricht und die zweite Beacon Nachricht nicht-verbindbare Bluetooth-Pakete sind.

7. Verfahren nach Anspruch 1, wobei:
die erste Beacon Nachricht entweder eine erste universelle eindeutige Kennung mit einer ersten Länge von Null aufweist oder keine Bluetooth SIG spezifizierte universelle eindeutige Kennung aufweist, und
die zweite Beacon Nachricht eine zweite universelle eindeutige Kennung mit einer zweiten Länge, die ungleich Null ist, aufweist.

8. Rechenvorrichtung, aufweisend:
einen Transceiver konfiguriert zum Empfang von Beacon Nachrichten; und
einen Prozessor gekoppelt mit dem Transceiver und konfiguriert mit prozessorausführbaren Instruktionen, um die Beacon Nachrichten zu verarbeiten, welche in einer Weise übertragen werden, welche Beacon Nachrichten unter Verwendung eines ersten Paketformates und Beacon Nachrichten unter Verwendung eines zweiten Paketformates verschachtelt, durch Durchführen von Operationen aufweisend:
Empfangen (1352) über den Transceiver, einer ersten Beacon Nachricht in dem ersten Paketformat;
Detektieren (1354) von Informationen in der ersten Beacon Nachricht angebend ein Vorliegen von einer oder mehreren Beacon Nachrichten in dem zweiten Paketformat;
Einstellen (1356) der Rechenvorrichtung, um die eine oder die mehreren Beacon Nachrichten in dem zweiten Paketformat basierend auf der detektierten Information zu verarbeiten;
Empfangen (1358) über den Transceiver in Antwort auf das Anpassen der Rechenvorrichtung, einer zweiten Beacon Nachricht in dem zweiten Paketformat, wobei die erste Beacon Nachricht und die zweite Beacon Nachricht in der verschachtelten Weise übertragen werden; und
Durchführen (1362) einer Aktion basierend auf der empfangenen zweiten Beacon Nachricht.

9. Rechenvorrichtung nach Anspruch 8, wobei der Prozessor konfiguriert ist mit prozessorausführbaren Instruktionen, so dass Empfangen über den Transceiver der zweiten Beacon Nachricht in dem zweiten Paketformat mehr Leistung verbraucht als Empfangen über den Transceiver der ersten Beacon Nachricht in dem ersten Paketformat.

10. Rechenvorrichtung nach Anspruch 8, wobei der Prozessor konfiguriert ist mit prozessorausführbaren Instruktionen, so dass das Anpassen der Rechenvorrichtung, um die eine oder mehreren Beacon Nachrichten in dem zweiten Paketformat basierend auf der detektierten Information zu verarbeiten, wenigstens eines der folgenden aufweist:
Aufwachen einer Softwareimplementierung, die assoziiert ist mit der einen oder den mehreren Beacon Nachrichten in dem zweiten Paketformat basierend auf der detektierten Information; und
Ändern eines Arbeitszyklus für die Softwareimplementierung, die assoziiert ist mit der einen oder den mehreren Beacon Nachrichten in dem zweiten Paketformat, um eine Frequenz, bei der die Softwareimplementierung für den Empfang der einen oder der mehreren Beacon Nachrichten in dem zweiten Paketformat bei der Rechenvorrichtung überwacht, zu erhöhen.

11. Rechenvorrichtung nach Anspruch 8, wobei der Prozessor konfiguriert ist mit prozessorausführbaren Instruktionen, so dass das Durchführen der Aktion basierend auf der empfangenen zweiten Beacon Nachricht das Übertragen an einen Server einer Sichtungsnachricht aufweisend Daten von der empfangenen zweiten Beacon Nachricht aufweist.

12. Rechenvorrichtung nach Anspruch 8, wobei der Prozessor konfiguriert ist mit prozessorausführbaren Anweisungen weiterhin aufweisend:
Identifizieren eines ersten Teils von Daten durch Verarbeiten der empfangenen ersten Beacon Nachricht; und
Identifizieren eines zweiten Teils von Daten durch Verarbeiten der empfangenen zweiten Beacon Nachricht,
wobei das Durchführen der Aktion basierend auf der zweiten Beacon Nachricht aufweist:
Kombinieren des identifizierten ersten Teils von den Daten und des identifizierten zweiten Teils von den Daten;
Erzeugen eines Befehls basierend auf der Kombination von dem identifizierten ersten Teil von Daten und dem identifizierten zweiten Teil von Daten; und
Ausführen des Befehls.

13. Rechenvorrichtung nach Anspruch 8, wobei:
die erste Beacon Nachricht entweder eine erste universelle eindeutige Kennung mit einer ersten Länge von Null aufweist oder keine Bluetooth SIG spezifizierte universelle eindeutige Kennung aufweist; und
die zweite Beacon Nachricht eine zweite universelle eindeutige Kennung aufweist mit einer zweiten Länge, die nicht Null ist.

14. System, aufweisend:
eine Rechenvorrichtung, die konfiguriert ist, um Beacon Nachrichten zu empfangen und zu verarbeiten, welche in einer Weise übertragen werden, welche Beacon Nachrichten unter Verwendung eines ersten Paketformates und Beacon Nachrichten unter Verwendung eines zweiten Paketformates verschachtelt; und
eine erste Beacon Vorrichtung aus einer Mehrzahl von nahen Beacon Vorrichtungen,
wobei die Rechenvorrichtung aufweist:
einen ersten Transceiver; und
einen ersten Prozessor gekoppelt mit dem ersten Transceiver und konfiguriert mit prozessorausführbaren Instruktionen, um Operationen durchzuführen, die aufweisen:
Empfangen (1352), über den ersten Transceiver einer ersten Beacon Nachricht in dem ersten Paketformat;
Detektieren (1354) von Informationen in der ersten Beacon Nachricht angebend ein Vorliegen von einer oder mehreren Beacon Nachrichten in dem zweiten Paketformat, welche übertragen werden durch eine von der Mehrzahl von nahen Beacon Vorrichtungen;
Einstellen (1356) der Rechenvorrichtung, um die eine oder die mehreren Beacon Nachrichten in dem zweiten Paketformat basierend auf der detektierten Information zu verarbeiten;
Empfangen (1358), über den ersten Transceiver in Antwort auf das Anpassen der Rechenvorrichtung einer zweiten Beacon Nachricht in dem zweiten Paketformat, wobei die erste Beacon Nachricht und die zweite Beacon Nachricht in der verschachtelten Weise übertragen werden; und
Durchführen (1362), durch die Rechenvorrichtung, einer Aktion basierend auf der empfangenen zweiten Beacon Nachricht,
wobei die erste Beacon Vorrichtung aufweist:
einen zweiten Transceiver; und
einen zweiten Prozessor gekoppelt mit dem zweiten Transceiver und konfiguriert mit prozessorausführbaren Instruktionen, um Operationen durchzuführen, die aufweisen:
Ausstrahlen (1302), über den zweiten Transceiver, der ersten Beacon Nachricht in dem ersten Paketformat.

15. Computerprogramm aufweisend Instruktionen zum Durchführen eines Verfahrens nach einem beliebigen der Ansprüche 1-7.

## Revendications

1. Procédé de traitement de messages de balise émis avec entrelacement de messages de balise utilisant un premier format de paquet et de messages de balise utilisant un second format de paquet, le procédé comprenant :
la réception (1352), par un récepteur via un émetteur-récepteur, d'un premier message de balise du premier format de paquet ;
la détection (1354) d'informations dans le premier message de balise indiquant une présence d'un ou de plusieurs messages de balise du second format de paquet ;
l'ajustement (1356) du récepteur pour traiter le ou les plusieurs messages de balise du second format de paquet sur la base des informations détectées ;
la réception (1358), par le récepteur via l'émetteur-récepteur en réponse à l'ajustement du récepteur, d'un second message de balise du second format de paquet ; et
la réalisation (1362), par le récepteur, d'une action sur la base du second message de balise reçu.

2. Procédé selon la revendication 1, dans lequel la réception via l'émetteur-récepteur du second message de balise du second format de paquet consomme plus d'énergie que la réception via l'émetteur-récepteur du premier message de balise du premier format de paquet.

3. Procédé selon la revendication 1, dans lequel l'ajustement (1356) du récepteur pour traiter le ou les plusieurs messages de balise du second format de paquet sur la base des informations détectées comprend au moins l'un d'entre :
le réveil, par le récepteur, d'une implémentation logicielle associée au ou aux plusieurs messages de balise du second format de paquet sur la base des informations détectées ; et
le changement, par le récepteur, d'un cycle de travail pour l'implémentation logicielle associée au ou aux plusieurs messages de balise du second format de paquet pour augmenter une fréquence à laquelle l'implémentation logicielle surveille la réception du ou des plusieurs messages de balise du second format de paquet au niveau du récepteur.

4. Procédé selon la revendication 1, dans lequel la réalisation (1362), par le récepteur, de l'action sur la base du second message de balise reçu comprend l'émission, par le récepteur, vers un serveur d'un message de repérage incluant des données du second message de balise reçu.

5. Procédé selon la revendication 1, comprenant en outre :
l'identification, par le récepteur, d'une première partie de données par traitement du premier message de balise reçu ; et
l'identification, par le récepteur, d'une seconde partie des données par traitement du second message de balise reçu,
dans lequel la réalisation, par le récepteur, de l'action sur la base du second message de balise reçu comprend :
la combinaison, par le récepteur, de la première partie identifiée des données et de la seconde partie identifiée des données ;
la génération, par le récepteur, d'une commande sur la base de la combinaison de la première partie identifiée des données et de la seconde partie identifiée des données ; et
l'exécution de la commande par le récepteur.

6. Procédé selon la revendication 1, dans lequel le premier message de balise et le second message de balise sont des paquets Bluetooth non connectables.

7. Procédé selon la revendication 1, dans lequel :
le premier message de balise soit inclut un premier identifiant unique universel avec une première longueur de zéro, soit n'inclut pas d'identifiant unique universel spécifié Bluetooth SIG ; et
le second message de balise inclut un second identifiant unique universel avec une seconde longueur qui n'est pas zéro.

8. Dispositif informatique, comprenant :
un émetteur-récepteur configuré pour recevoir des messages de balise ; et
un processeur couplé à l'émetteur-récepteur et configuré avec des instructions exécutables par processeur pour traiter les messages de balise émis avec entrelacement de messages de balise utilisant un premier format de paquet et de messages de balise utilisant un second format de paquet par la réalisation d'opérations comprenant :
la réception (1352), via l'émetteur-récepteur, d'un premier message de balise du premier format de paquet ;
la détection (1354) d'informations dans le premier message de balise indiquant une présence d'un ou de plusieurs messages de balise du second format de paquet ;
l'ajustement (1356) du dispositif informatique pour traiter le ou les plusieurs messages de balise du second format de paquet sur la base des informations détectées ;
la réception (1358), via l'émetteur-récepteur en réponse à l'ajustement du dispositif informatique, d'un second message de balise du second format de paquet, dans lequel le premier message de balise et le second message de balise sont émis avec l'entrelacement ; et
la réalisation (1362) d'une action sur la base du second message de balise reçu.

9. Dispositif informatique selon la revendication 8, dans lequel le processeur est configuré avec des instructions exécutables par processeur de sorte que la réception via l'émetteur-récepteur du second message de balise du second format de paquet consomme moins d'énergie que la réception via l'émetteur-récepteur du premier message de balise du premier format de paquet.

10. Dispositif informatique selon la revendication 8, dans lequel le processeur est configuré avec des instructions exécutables par processeur de sorte que l'ajustement du dispositif informatique pour traiter le ou les plusieurs messages de balise du second format de paquet sur la base des informations détectées comprend au moins un de :
le réveil d'une implémentation logicielle associée au ou aux plusieurs messages de balise du second format de paquet sur la base des informations détectées ; et
le changement d'un cycle de travail pour l'implémentation logicielle associée au ou aux plusieurs messages de balise du second format de paquet pour augmenter une fréquence à laquelle l'implémentation logicielle surveille la réception du ou des plusieurs messages de balise du second format de paquet au niveau du dispositif informatique.

11. Dispositif informatique selon la revendication 8, dans lequel le processeur est configuré avec des instructions exécutables par processeur de sorte que la réalisation de l'action sur la base du second message de balise reçu comprend l'émission vers un serveur d'un message de repérage incluant des données du second message de balise reçu.

12. Dispositif informatique selon la revendication 8, dans lequel le processeur est configuré avec des instructions exécutables par processeur comprenant en outre :
l'identification d'une première partie de données par traitement du premier message de balise reçu ; et
l'identification d'une seconde partie des données par traitement du second message de balise reçu,
dans lequel la réalisation de l'action sur la base du second message de balise reçu comprend :
la combinaison de la première partie identifiée des données et de la seconde partie identifiée des données ;
la génération d'une commande sur la base de la combinaison de la première partie identifiée des données et de la seconde partie identifiée des données ; et
l'exécution de la commande.

13. Dispositif informatique selon la revendication 8, dans lequel :
le premier message de balise soit inclut un premier identifiant unique universel avec une première longueur de zéro, soit n'inclut pas d'identifiant unique universel spécifié Bluetooth SIG ; et
le second message de balise inclut un second identifiant unique universel avec une seconde longueur qui n'est pas zéro.

14. Système, comprenant :
un dispositif informatique qui est configuré pour recevoir et traiter des messages de balise émis avec entrelacement de messages de balise utilisant un premier format de paquet et de messages de balise utilisant un second format de paquet ; et
un premier dispositif de balise d'une pluralité de dispositifs de balise avoisinants,
dans lequel le dispositif informatique comprend :
un premier émetteur-récepteur ; et
un premier processeur couplé au premier émetteur-récepteur et configuré avec des instructions exécutables par processeur pour réaliser des opérations comprenant :
la réception (1352), via le premier émetteur-récepteur, d'un premier message de balise du premier format de paquet ;
la détection (1354) d'informations dans le premier message de balise indiquant une présence d'un ou de plusieurs messages de balise du second format de paquet qui ont été émis par un dispositif de la pluralité de dispositifs de balise avoisinants ;
l'ajustement (1356) du dispositif informatique pour traiter le ou les plusieurs messages de balise du second format de paquet sur la base des informations détectées ;
la réception (1358), via le premier émetteur-récepteur en réponse à l'ajustement du dispositif informatique, d'un second message de balise du second format de paquet, dans lequel le premier message de balise et le second message de balise sont émis avec l'entrelacement ; et
la réalisation (1362), par le dispositif informatique, d'une action sur la base du second message de balise reçu,
dans lequel le premier dispositif de balise comprend :
un second émetteur-récepteur ; et
un second processeur couplé au second émetteur-récepteur et configuré avec des instructions exécutables par processeur pour réaliser des opérations comprenant :
la diffusion (1302), via le second émetteur-récepteur, du premier message de balise dans le premier format de paquet.

15. Programme d'ordinateur comprenant des instructions pour la réalisation d'un procédé selon l'une quelconque des revendications 1 à 7.
